# EUROPEAN PATENT APPLICATION

(11) **EP 4 663 467 A1**
(43) Date of publication of application: **17.12.2025**
(21) Application number: 24753475.3
(22) Date of filing: 04.01.2024
(51) Int. Cl.: B60L 53/67, B60L 55/00, B60L 53/63, B60L 53/64

(54) **ELECTRONIC DEVICE AND CHARGER CONTROL METHOD THEREOF**

(30) Priority: 10.02.2023 KR 20230018336
(71) Applicant: Greenergenic Inc., Seoul 04378 (KR)
(72) Inventor: OH, Tchang Hun, Seoul 07324 (KR); PAGLIARELLA, Riccardo Marco, Doncaster East, VIC 3109 (AU); JEON, Joon Young, Gwangju 61091 (KR)
(74) Representative: Isarpatent
(86) International application number: PCT/KR2024/000228
(87) International publication number: WO 2024/167143

(57) **Abstract**

An electronic device for controlling a plurality of chargers is disclosed. The electronic device may comprise: a bidirectional power conversion module; and a controller which controls the bidirectional power conversion module and the plurality of chargers, wherein: the plurality of chargers each comprise a bidirectional DC/DC converter and a sub-controller which controls the bidirectional DC/DC converter; the bidirectional power conversion module is connected to the plurality of bidirectional DC/DC converters included in the plurality of chargers via a DC bus; and the controller controls the bidirectional power conversion module and the plurality of sub-controllers included in the plurality of chargers to thereby control charging or discharging of one or more vehicles connected to one or more of the plurality of chargers.

## Description

### Technical Field

The present disclosure relates to an electronic device configured to charge or discharge one or more vehicles by controlling a plurality of chargers connected to a DC bus, a system and a method controlling the same.

### Background Art

In terms of environmental aspects such as improving air quality and reducing carbon dioxide emissions, energy security aspects such as oil dependency reduction and industrial aspects such as new industry development, electric vehicles are expanding worldwide. In conjunction with this, increasing also is interest in vehicle to grid (V2G) technology in which the battery of the electric vehicle can be used as a mobile energy storage device that can be used for various purposes that helps to operate the power system as well as the energy device for moving a car.

However, for the practical use of the V2G, a charging system is required to more efficiently recharge and discharge the battery of the electric vehicle based on a variety of factors.

With regard thereto, prior art such as KR 10-2022-0058239 A and KR 10-2022-0085541 A may be referred to.

### Detailed Description of the Invention

### Technical Goals

Disclosed example embodiments are to provide an electronic device and a method of controlling a charger of the same. More specifically, the purpose is to provide an electronic device that is configured to charge or discharge one or more vehicles, provide power system services such as frequency response, and reduce the voltage of the DC bus in the event of an emergency stop, by controlling a plurality of chargers connected through the DC bus, and a method of controlling the same.

The technical tasks to be achieved by the present example embodiments are not limited to the technical tasks described above, and other technical tasks may be inferred from the following example embodiments.

### Technical solutions

According to an aspect, there is provided an electronic device of controlling a plurality of chargers, the electronic device including a bidirectional power conversion module and a controller configured to control the bidirectional power conversion module and the plurality of chargers, wherein each of the plurality of chargers comprises a bidirectional DC/DC converter and a sub-controller configured to control the bidirectional DC/DC converter, the bidirectional power conversion module is connected to a plurality of bidirectional DC/DC converters included in the plurality of chargers through a DC bus, and wherein the controller is configured to control charge or discharge of one or more vehicles connected to the one or more chargers among the plurality of chargers, by controlling the bidirectional power conversion module and a plurality of sub-controllers included in the plurality of chargers.

Further, in an example embodiment of the present disclosure, provided may be the electronic device, wherein combined peak charging power of the bidirectional power conversion module is set to be equal to or smaller than a sum of peak charging power of each of the plurality of chargers, and combined peak discharging power of the bidirectional power conversion module is set to be equal to or smaller than a sum of peak discharging power of each of the plurality of chargers.

Further, in an example embodiment of the present disclosure, provided may be the electronic device, wherein the controller, when controlling charge or discharge of the one or more vehicles, is configured to control charge or discharge of the one or more vehicles, based on at least one of the combined peak charging power, peak charging power of each of the plurality of chargers, requested charging power of each of the plurality of chargers, the combined peak discharging power, peak discharging power of each of the plurality of chargers, requested discharging power of each of the plurality of chargers, priority of each of the one or more chargers, priority of a user of each of the one or more vehicles, an expected departure time of a user of each of the one or more vehicles, an hourly charging fee, proceeds from discharging by time, proceeds from discharging by purpose, a battery remaining level of each of the one or more vehicles, a requested charging amount of each of the one or more vehicles, and configuration information of the user for whether to allow discharging.

Further, in an example embodiment of the present disclosure, provided may be the electronic device, wherein the controller, when controlling charge or discharge of the one or more vehicles, is configured to charge the one or more vehicles with requested charging power of each of the one or more chargers, when a sum of requested charging power of each of the one or more chargers is smaller than the combined peak charging power.

Further, in an example embodiment of the present disclosure, provided may be the electronic device, wherein the controller, when controlling charge or discharge of the one or more vehicles, is configured to charge the one or more vehicles according to priority of the one or more vehicles that is determined based on at least one between priority of the one or more chargers to which each of the one or more vehicles is connected and priority of a user of each of the one or more vehicles, when a sum of requested charging power of each of the one or more chargers is greater than the combined peak charging power.

Further, in an example embodiment of the present disclosure, provided may be the electronic device, wherein the controller, when charging the one or more vehicles, is configured to control charging power and discharging power of each of the one or more chargers, in order to charge a requested charging amount of each of the one or more vehicles before an expected departure time of a user of each of the one or more vehicles, based on priority of the one or more vehicles.

Further, in an example embodiment of the present disclosure, provided may be the electronic device, wherein the controller, when controlling the charging power and discharging power of the one or more chargers, is configured to control charging power and discharging power of each of the one or more charger in order for a charging fee that is applied to each of the one or more vehicles to be minimum, based on the hourly charging fee.

Further, in an example embodiment of the present disclosure, provided may be the electronic device, wherein the controller, when controlling charging power and discharging power of the one or more chargers, is configured to control charging power and discharging power of each of the one or more chargers in order for economic return according to discharge of each of the one or more vehicles to be maximum, based on at least one of the proceeds from discharging by time and the proceeds from discharging by purpose.

Further, in an example embodiment of the present disclosure, provided may be the electronic device, wherein the controller, when controlling charge or discharge of the one or more chargers, is configured to discharge at least one third vehicle configured to allow discharging among one the one or more vehicles within a maximum discharging available time corresponding to each, when a discharging-required situation occurs while charging d.

Further, in an example embodiment of the present disclosure, provided may be the electronic device, wherein a maximum discharging available time of a fourth vehicle among the at least one third vehicle is determined based on at least one among a current battery remaining level of the fourth vehicle, a minimum dischargeable battery remaining level, an expected departure time of a user of the fourth vehicle, and a requested charging amount of the fourth vehicle.

Further, in an example embodiment of the present disclosure, provided may be the electronic device that further includes a meter, wherein when the meter detects power system frequency fluctuation exceeding a pre-configured range, the controller is configured to control charge or discharge of at least one fifth vehicle configured to allow frequency responding among the one or more vehicles, based on the frequency fluctuation, and the meter is configured to measure a charging power amount or a discharging power amount of the bidirectional power conversion module in response to charge or discharge of the at least one fifth vehicle.

Further, in an example embodiment of the present disclosure, provided may be the electronic device, wherein the controller is configured to identify rapid cutoff information and decrease voltage of the DC, by controlling the bidirectional power conversion module and the plurality of sub-controllers.

dof the present disclosure, provided may be the electronic device, wherein the controller is configured to, when decreasing the voltage of the DC bus, discharge output voltage of the plurality of chargers through the DC bus, and discharge voltage of the DC bus to a power system through the bidirectional power conversion module.

Further, in an example embodiment of the present disclosure, provided may be the electronic device, wherein the electronic device comprises a forced discharge circuit, and the controller is configured to, when decreasing voltage of the DC bus, suspend power conversion operation of the bidirectional power conversion module, and decrease the voltage of the DC bus by driving the forced discharge circuit.

Further, in an example embodiment of the present disclosure, provided may be the electronic device, wherein the electronic device comprises a forced discharge circuit, wherein each of the plurality of bidirectional DC/DC converters included in each of the plurality of chargers comprises a forced discharge circuit, and wherein the controller, when decreasing voltage of the DC bus, is configured to suspend charge of the one or more chargers, suspend power conversion operation of the bidirectional power conversion module, decrease the voltage of the DC bus by driving a plurality of forced discharge circuit included in each of the plurality of bidirectional DC/DC converters, and decrease the voltage of the DC bus by driving the forced discharge circuit included in the electronic device.

According to another aspect, there is provided a charging system that includes an electronic device comprising a bidirectional power conversion module and a controller, a plurality of chargers, each comprising a bidirectional DC/DC converter and a sub-controller that is to control the bidirectional DC/DC converter, and a DC bus configured to connect a plurality of bidirectional DC/DC converters included in the plurality of chargers and the bidirectional power conversion module, wherein the controller is configured to charge or discharge one or more vehicles connected to each of one or more chargers among the plurality of chargers, by controlling the bidirectional power conversion module and a plurality of sub-controllers included in the plurality of chargers.

Specific details of other example embodiments are included in the detailed description and drawings.

### Effects of the Invention

According to the suggested example embodiments, expected are one or more of below.

According to the example embodiments, by the electronic device, which collects and performs the two-way power conversion functions required by a plurality of chargers, integrating the plurality of chargers and controlling, it is possible to manage power more efficiently, while reducing initial installation costs at the same time.

Further, according to the example embodiments, proper charge/discharge control may be performed according to the power-based frequency fluctuations.

Further, according to the example embodiments, when the rapid shutdown command is issued due to an emergency, the high voltage of the DC bus inside the system can be reduced to a safe level.

The effects to be obtained in the present disclosure are not limited to the aforementioned effects, and other effects not mentioned herein will be clearly understood by those skilled in the art from the following description.

### Brief Description of Drawings

FIG. 1 illustrates a charging system according to an example embodiment.
FIG. 2 is a drawing for explaining a process in which an electronic device controls a plurality of chargers according to an example embodiment.
FIG. 3 is a drawing for explaining a process in which an electronic device controls a plurality of chargers according to an example embodiment.
FIG. 4 is a drawing illustrating a process in which an electronic device controls a plurality of chargers according to an example embodiment.
FIG. 5 is a drawing for explaining a process in which an electronic device controls a plurality of chargers according to an example embodiment.
FIG. 6 is a drawing for explaining a process in which an electronic device controls a plurality of chargers according to an example embodiment.
FIG. 7a and FIG. 7d are drawings illustrating a process in which an electronic device controls a plurality of chargers according to an example embodiment.
FIG. 8a to FIG. 8c are drawings illustrating a process in which an electronic device controls a plurality of chargers according to an example embodiment.
FIG. 9a and FIG. 9b are drawings for explaining a process in which an electronic device controls a plurality of chargers according to an example embodiment.
FIG. 10 is a drawing for explaining the process by which an electronic device reduces the voltage of a DC bus according to an example embodiment.
FIG. 11a and FIG. 11b are drawings for explaining the process of an electronic device reducing the voltage of a DC bus according to an example embodiment.
FIG. 12a to FIG. 12c are drawings for explaining the process by which an electronic device reduces the voltage of a DC bus according to an example embodiment.
FIG. 13a to FIG. 13c are drawings for explaining the process by which an electronic device reduces the voltage of a DC bus according to an example embodiment.
FIG. 14 illustrates a charging network according to an example embodiment.
FIG. 15 is a block diagram of an electronic device according to an example embodiment.

### Mode for Carrying Out the Invention

Terms used in the example embodiments are selected from currently widely used general terms when possible while considering the functions in the present disclosure. However, the terms may vary depending on the intention or precedent of a person skilled in the art, the emergence of new technology, and the like. Further, in certain cases, there are also terms arbitrarily selected by the applicant, and in the cases, the meaning will be described in detail in the corresponding descriptions. Therefore, the terms used in the present disclosure should be defined based on the meaning of the terms and the contents of the present disclosure, rather than the simple names of the terms.

Throughout the specification, when a part is described as "comprising or including" a component, it does not exclude another component but may further include another component unless otherwise stated.

Expression "at least one of a, b and c" described throughout the specification may include "a alone," "b alone," "c alone," "a and b," "a and c," "b and c" or "all of a, b and c."

In the present disclosure, a "terminal" may be implemented as, for example, a computer or a portable terminal capable of accessing a server or another terminal through a network. Here, the computer may include, for example, a notebook, a desktop computer, and/or a laptop computer which are equipped with a web browser. The portable terminal may be a wireless communication device ensuring portability and mobility, and include (but is not limited to) any type of handheld wireless communication device, for example, a tablet PC, a smartphone, a communication-based terminal such as international mobile telecommunication (IMT), code division multiple access (CDMA), W-code division multiple access (W-CDMA), long term evolution (LTE), or the like.

Hereinafter, example embodiments of the present disclosure will be described in detail with reference to the accompanying drawings so that those of ordinary skill in the art to which the present disclosure pertains may easily implement them. However, the present disclosure may be implemented in multiple different forms and is not limited to the example embodiments described herein.

Hereinafter, example embodiments will be described in detail with reference to the drawings.

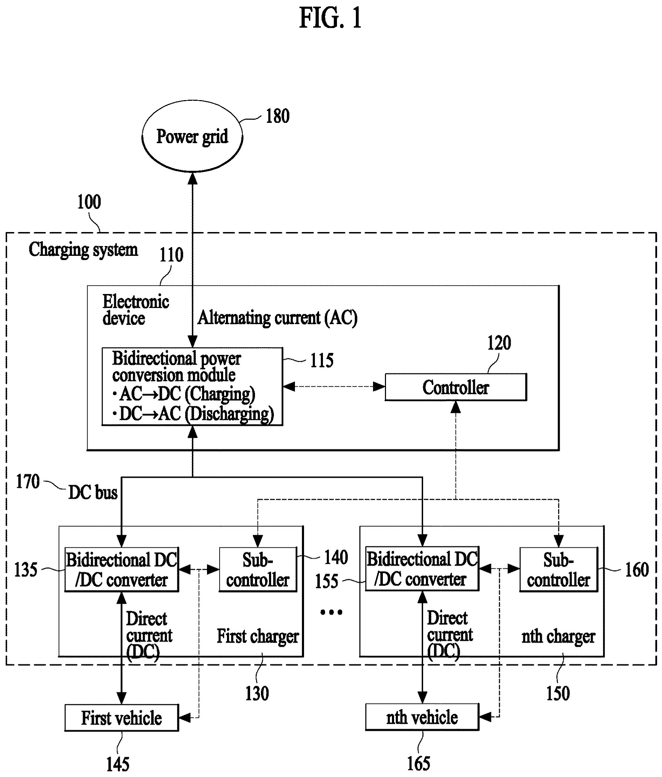

FIG. 1 illustrates a charging system 100 according to an example embodiment.

The charging system 100 is a system that provides charging services to one or more vehicles 145 and 165 that use batteries, and may help to operate the power system stably by controlling the charge or discharge of one or more vehicles 145 and 165 according to the needs of the power system. Referring to FIG. 1, the charging system 100 may include at least one of an electronic device 110, a plurality of chargers 130 and 150, and a DC bus 170. Meanwhile, the system illustrated in FIG. 1 shows only the elements relevant to the example embodiment. Therefore, it will be understood by those skilled in the art that other general elements may be included in addition to the elements illustrated in FIG. 1, in connection with the example embodiment.

The electronic device 110 is a device for controlling the plurality of chargers 130 and 150 included in the charging system 100, and the electronic device 110 may include a bidirectional power conversion module 115 and a controller 120. Unlike existing systems in which each charger operates individually, in the charging system 100 in the present disclosure, the electronic device 110 controls the plurality of chargers 130 and 150 integratively, and thus power may be managed more efficiently while initial installation costs are reduced.

The bidirectional power conversion module 115 is an element that performs conversion between direct current (DC) power (voltage) and alternating current (AC) power (voltage), and may perform conversion depending on the charge or discharge of one or more vehicles 145 and 165. For example, when charging one or more vehicles 145 and 165, the bidirectional power conversion module 115 may convert the AC power received from a power grid 180 into the DC power and transmit the DC power to one or more bidirectional DC/DC converters 135 and 155 via the DC bus 170. Alternatively, when discharging one or more vehicles 145 and 165, the bidirectional power conversion module 115 may convert the DC power received from one or more bidirectional DC/DC converters 135 and 155 into the AC power via the DC bus 170 and transmit the AC power to the power grid 180.

The controller 120 is an element that controls the bidirectional power conversion module 115 and a plurality of sub-controllers 140 and 160 included in the plurality of chargers 130 and 150, and the controller 120 may control the charge or discharge of one or more vehicles 145 and 165. For example, based on a combined peak charging power or combined peak discharging power of the bidirectional power conversion module 115, a peak charging power or peak discharging power of each of the plurality of chargers 130 and 150, a battery remaining level or a requested charging amount of each of one or more vehicles 145 and 65 or priority of a user of each of one or more vehicles 45 and 165, the controller 120 may control the charge or discharge of one or more vehicles 145 and 165. Alternatively, the controller 120 may control the bidirectional power conversion module 115 and the plurality of sub-controllers 140 and 160 by identifying rapid cutoff information in the event of an emergency such as a fire, and the controller may reduce the voltage of the DC bus 170 to a safe level to respond to emergency situations.

Meanwhile, FIG. 1 illustrates that the electronic device 110 includes the bidirectional power conversion module 115, but as the number of chargers included in the charging system 100 increases or the charging power or discharging power of the chargers increases, the electronic device 110 may additionally include a bidirectional power conversion module. As such, when the charging system 100 includes a plurality of bidirectional power conversion modules, the charging system 100 may operate without interruption even if one of the modules stops operating.

The plurality of chargers 130 and 150 are devices for charging or discharging one or more vehicles 145 and 165, and each may include a bidirectional DC/DC converter (a bidirectional DC/DC converter 135, a bidirectional DC/DC converter 155) and a sub-controller (a sub-controller 140, a sub-controller 160).

The bidirectional DC/DC converter (the bidirectional DC/DC converter 135, the bidirectional DC/DC converter 155) is an element that performs conversion of the DC voltage, and may step down or step up the voltage depending on whether the connected vehicle (a vehicle 145, a vehicle 165) is being charged or discharged. For example, when charging the connected vehicle (the vehicle 145, the vehicle 165), the bidirectional DC/DC converter (the bidirectional DC/DC converter 135, the bidirectional DC/DC converter 155) may convert the voltage of DC power received from the bidirectional power conversion module 115 via the DC bus 170 into a voltage suitable for the connected vehicle (the vehicle 145, the vehicle 165). Or, when discharging the connected vehicle (the vehicle 145, the vehicle 165), the bidirectional DC/DC converter (the bidirectional DC/DC converter 135, the bidirectional DC/DC converter 155) may convert the voltage of the DC power received from the connected vehicle (the vehicle 145, the vehicle 165) into a voltage suitable for the bidirectional power conversion module 115.

The sub-controller (the sub-controller 140, the sub-controller 160) is an element for controlling the bidirectional DC/DC converter (the bidirectional DC/DC converter 135, the bidirectional DC/DC converter 155), and may control the bidirectional DC/DC converter (the bidirectional DC/DC converter 135, the bidirectional DC/DC converter 155) according to the instructions of the controller 120 or the vehicle (the vehicle 145, the vehicle 165) connected to the charger.

The DC bus 170 is a device for transmitting power between the bidirectional power conversion module 115 and the plurality of bidirectional DC/DC converters 135 and 155, and may transmit high voltage power from 100V to 1000V depending on charge or discharge of one or more vehicles 145 and 165. For example, when charging one or more vehicles 145 and 165, the DC bus 170 may transfer power from the bidirectional power conversion module 115 to the plurality of bidirectional DC/DC converters 135 and 155. Alternatively, when discharging one or more vehicles 145 and 165, the DC bus 170 may transfer power from the bidirectional DC/DC converters 135 and 155 to multiple the bidirectional power conversion modules 115.

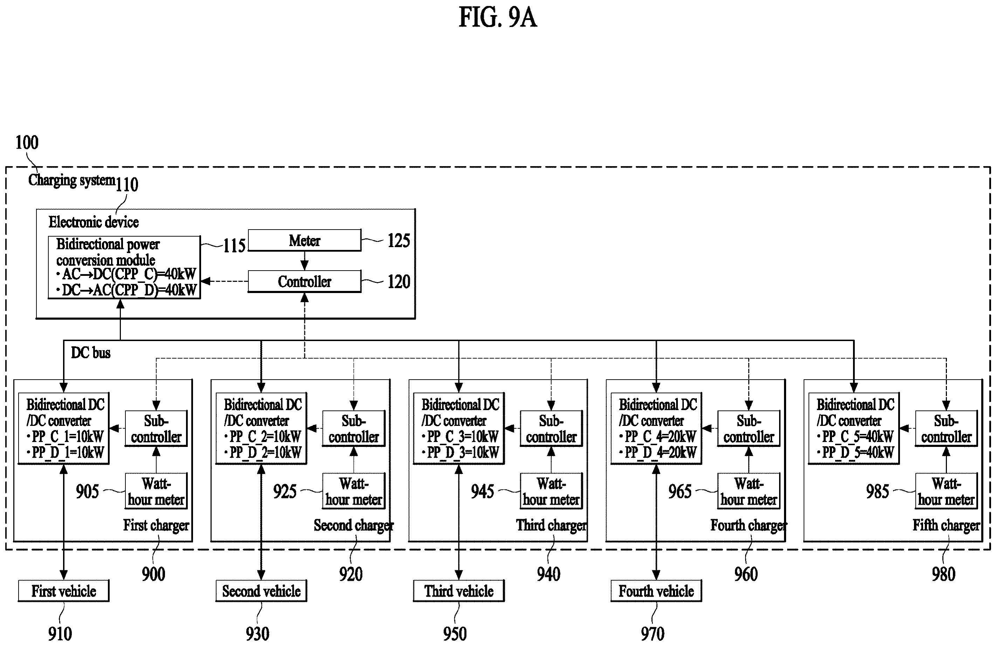

Meanwhile, the electronic device 110 may further include a meter in addition to the bidirectional power conversion module 115 and the controller 120, and each of the plurality of chargers 130 and 150 may further include a Watt-hour meter in addition to a bidirectional DC/DC converter (the bidirectional DC/DC converter 135, the bidirectional DC/DC converter 155) and a sub-controller (the sub-controller 140, the sub-controller 160). Details with regard thereto are described with reference to FIG. 9a to FIG. 9b.

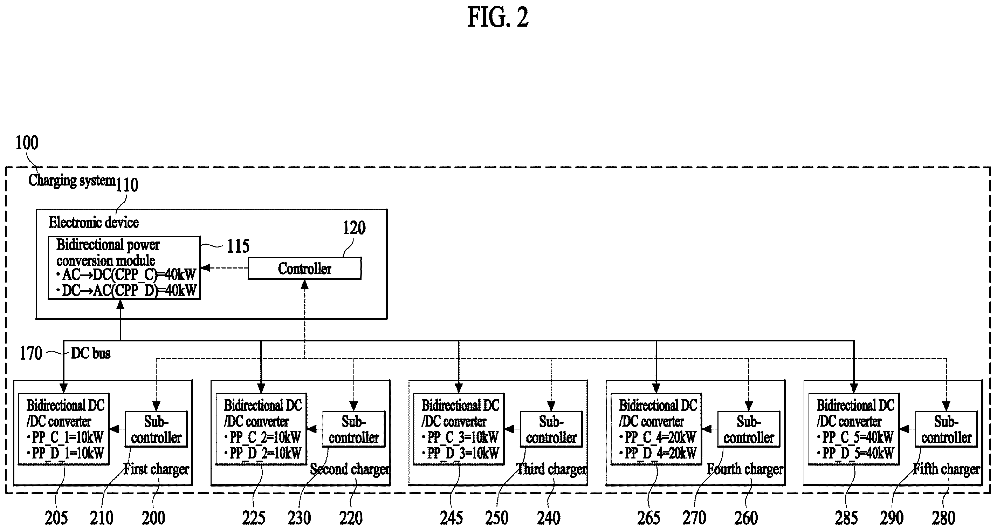

FIG. 2 is a drawing for explaining a process in which the electronic device 110 controls a plurality of chargers 200, 220, 240, 260 and 280 according to an example embodiment. The description repetitive to FIG. 1 will be briefly explained or omitted.

According to an example embodiment, the charging system 100 may include the electronic device 110, the plurality of chargers 200, 220, 240, 260 and 280 and the DC bus 170. By controlling the bidirectional power conversion modules 115 and a plurality of sub-controllers 210, 230, 250, 270 and 290, the controller 120 included in the electronic device 110 may control the charge or discharge of one or more vehicles connected to one or more chargers among the plurality of chargers 200, 220, 240, 260 and 280.

According to an example embodiment, the combined peak charging power of the bidirectional power conversion module 115 may be set to be less than or equal to the sum of peak charging power of each of the plurality of chargers 200, 220, 240, 260 and 280. For example, referring to FIG. 2, the peak charging power of a first charger 200, a second charger 220 and a third charger 240 may be 10 kW, the peak charging power of a fourth charger 260 may be 20 kW, and the peak charging power of a fifth charger 280 may be 40 kW. Accordingly, the combined peak charging power of the bidirectional power conversion module 115 may be set to 40 kW, which is less than 90 kW, which is the sum of the peak charging power of each of the plurality of chargers 200, 220, 240, 260 and 280. As such, according to that the combined peak charging power of the bidirectional power conversion module 115 is set to be less than the sum of the peak charging power of each of the plurality of chargers 200, 220, 240, 260 and 280, most situations where only a few chargers out of the plurality of chargers 200, 220, 240, 260 and 280 are used may be possible with a lower cost.

Here, the combined peak charging power CCP_C of the bidirectional power conversion module 115 may indicate the maximum power that may be charged through the bidirectional power conversion module 115 or the maximum AC power that the bidirectional power conversion module 115 may convert into the DC power. The combined peak charging power of the bidirectional power conversion module 115 may represent a value determined during the design of the charging system 100 or a value that temporarily changes depending on external input.

Further, a peak charging power PP_C of each of the plurality of chargers 200, 220, 240, 260 and 280 may indicate the maximum power that may be charged by each of the plurality of chargers 200, 220, 240, 260 and 280, or the maximum DC power that may be converted by each of a plurality of bidirectional DC/DC converters 205, 225, 245, 265 and 285. The peak charging power of each of the plurality of chargers 200, 220, 240, 260 and 280 may represent a value determined when designing the charging system 100 or a value that temporarily changes depending on external input.

According to an example embodiment, the combined peak discharging power of the bidirectional power conversion module 115 may be set to be less than or equal to the sum of the peak discharging power of each of the plurality of chargers 200, 220, 240, 260 and 280. For example, referring to FIG. 2, the peak discharging power of the first charger 200, the second charger 220 and the third charger 240 may be 10 kW, the peak discharging power of the fourth charger 260 may be 20 kW, and the peak discharging power of the fifth charger may be 40 kW. Accordingly, the combined peak discharging power of the bidirectional power conversion module 115 may be set to 40 kW, which is less than the sum of the peak discharging power of each of the plurality of chargers 200, 220, 240, 260 and 280, which is 90 kW.

Here, the combined peak discharging power CCP_D of the bidirectional power conversion module 115 may indicate the maximum power that may be transmitted to the power grid through the bidirectional power conversion module 115 or the maximum DC power that the bidirectional power conversion module 115 may convert into AC power. The combined peak discharging power of the bidirectional power conversion module 115 may represent a value determined during the design of the charging system 100 or a value that temporarily changes depending on external input.

Further, peak discharging power PP_D of each of the plurality of chargers 200, 220, 240, 260 and 280 may indicate the maximum power that may be discharged from the electric vehicle battery connected to each of the plurality of chargers 200, 220, 240, 260 and 280 or the maximum DC power that each of the plurality of bidirectional DC/DC converters 205, 225, 245, 265 and 285 may convert. The peak discharging power of the plurality of chargers 200, 220, 240, 260 and 280 may represent a value determined during the design of the charging system 100 or a value that temporarily changes depending on external input.

According to an example embodiment, the electronic device 110 may control the charge or discharge of one or more vehicles based on various factors. For example, the electronic device 110 may control the charge or discharge of one or more vehicles based on at least one among combined peak charging power of the bidirectional power conversion module 115, peak charging power of each of the plurality of chargers 200, 220, 240, 260 and 280, requested charging power of each of the plurality of chargers 200, 220, 240, 260 and 280, combined peak discharging power of the bidirectional power conversion module 115, peak discharging power of each of the plurality of chargers 200, 220, 240, 260 and 280, requested discharging power of each of the plurality of chargers 200, 220, 240, 260 and 280, the priority of each of one or more chargers, the priority of a user of each of one or more vehicles, an expected departure time of a user of each of one or more vehicles, an hourly charging fee, proceeds from discharging by time, a battery remaining level of each of one or more vehicles, a requested charging amount of each of one or more vehicles and configuration information of a user for whether to allow discharging.

According to an example embodiment, the electronic device 110 may charge one or more vehicles based on the combined peak charging power of the bidirectional power conversion module 115 and the requested charging power of each of the plurality of chargers 200, 220, 240, 260 and 280. For example, the electronic device 110 may distribute charging power to each charger in order for the sum of the power supplied to each of the plurality of chargers 200, 220, 240, 260 and 280 not to exceed the combined peak charging power of the bidirectional power conversion module 115.

Here, the requested charging power of each of the plurality of chargers 200, 220, 240, 260 and 280 is a value representing the charging power requested by each of the plurality of sub-controllers 210, 230, 250, 270 and 290 to the controller 120, and the requested charging power may be determined based on a request from a vehicle connected to each of the plurality of chargers 200, 220, 240, 260 and 280 or an internal environment of each of the plurality of chargers 200, 220, 240, 260 and 280. Further, the requested charging power of each of the plurality of chargers 200, 220, 240, 260 and 280 may represent a value less than or equal to the peak charging power of each of the plurality of chargers 200, 220, 240, 260 and 280. Meanwhile, hereinafter, as the charger requests charging power to the electronic device 110 with its peak charging power, the requested charging power may have the same value as the peak charging power, but it only pertains to an example embodiment, and the requested charging power may have a value less than the peak charging power.

According to an example embodiment, the electronic device 110 may discharge one or more vehicles based on the combined peak discharging power of the bidirectional power conversion module 115 and the requested discharging power of each of the plurality of chargers 200, 220, 240, 260 and 280. For example, the electronic device 110 may determine the discharging power for each charger in order for the sum of the power received from each of the plurality of chargers 200, 220, 240, 260 and 280 not to exceed the combined peak discharging power of the bidirectional power conversion module 115.

Here, the requested discharging power of each of the plurality of chargers 200, 220, 240, 260 and 280 is a value representing the discharging power requested by each of the plurality of sub-controllers 210, 230, 250, 270 and 290 to the controller 120, and the requested discharging power may be determined based on a request of a vehicle connected to each of the plurality of chargers 200, 220, 240, 260 and 280 or an internal environment of each of the plurality of chargers 200, 220, 240, 260 and 280. Further, the requested discharging power of each of the plurality of chargers 200, 220, 240, 260 and 280 may represent a value less than or equal to the peak discharging power of each of the plurality of chargers 200, 220, 240, 260 and 280. Meanwhile, hereinafter, as the charger requests discharging power to the electronic device 110 with its peak discharging power, the requested discharging power may have a value equal to the peak discharging power, but it only pertains to an example embodiment, and the requested discharging power may have a value less than or equal to the peak discharging power.

According to an example embodiment, the electronic device 110 may charge one or more vehicles based on the priority of each of the one or more chargers. More specifically, the electronic device 110 may assign different priorities to one or more chargers depending on whether the charger for which fast charging is supported is fast charging or slow charging, among one or more chargers.

For example, when the electronic device 110 identifies that a user of a vehicle connected to the fourth charger 260 and a fifth charger 280 selects fast charging, the electronic device 110 may give equal priority to the first charger 200, the second charger 220 and the third charger by giving the fifth charger 280 higher priority than first charger 200, the second charger 220, the third charger and the fourth charger 260 and giving the fourth charger 260 higher priority than first charger 200, the second charger 220 and the third charger. Accordingly, the electronic device 110 may supply higher charging power or supply charging power first to a taller vehicle connected to the fifth charger 280 among one or more vehicles.

According to an example embodiment, the electronic device 110 may charge one or more vehicles based on the priority of each user. For example, the electronic device 110 may supply higher charging power or supply charging power first to a vehicle with a higher user priority among one or more vehicles.

According to an example embodiment, the electronic device 110 may charge one or more vehicles based on an expected departure time of a user of each of one or more vehicles. For example, the electronic device 110 may supply higher charging power or supply charging power first to one or more vehicles among which the user's expected departure time is earlier than other vehicles.

According to an example embodiment, the electronic device 110 may charge one or more vehicles based on an expected departure time of a user of each of one or more vehicles, a requested charging amount of each of one or more vehicles, and an hourly charging fee. More specifically, the electronic device 110 may control the charging power and discharging power of one or more chargers in order for the charging fee applied to each of one or more vehicles to be minimum.

For example, the hourly charging fee may be set in the order of a fourth fee (corresponding to 17∼21 o'clock) > a third fee (corresponding to 8~10 o'clock) > a second fee (corresponding to 10∼17 o'clock) > a first fee (corresponding to 21∼8 o'clock) based on the number of users per time zone or power usage per time zone. Accordingly, the electronic device 110 may minimize the charging fee charged to each of one or more vehicles, by charging one or more vehicles first during low-rate times and charging the requested charging amount before each user's expected departure time for one or more vehicles at the same time.

According to an example embodiment, the electronic device 110 may discharge one or more vehicles based on an expected departure time of a user of each of one or more vehicles, a requested charging amount of each of one or more vehicles, proceeds from discharging by time and proceeds from discharging by purpose. More specifically, the electronic device 110 may control the charging power and discharging power of one or more chargers in order for the economic return on each discharge of one or more vehicles to be maximum.

For example, the proceeds based on discharge may be set in the order of fourth proceeds (corresponding to 17~21 o'clock) > third proceeds (corresponding to 8∼10 o'clock) > second proceeds (corresponding to 10∼17 o'clock) > first proceeds (corresponding to 21~8 o'clock) based on the number of users per time zone or power usage per time zone. Accordingly, the electronic device 110 may maximize the economic return from each discharge of one or more vehicles, by discharging one or more vehicles first during high proceeds time periods within the dischargeable power and dischargeable time determined based on an expected departure time of a user of each of one or more vehicles and a requested charging amount of each of one or more vehicles.

**In** another example embodiment, proceeds based on discharge may be determined differently based on the purpose of discharging the vehicle, such as to adjust the frequency or to reduce the peak load. Accordingly, the electronic device 110 may maximize the economic return from each discharge of one or more vehicles by discharging one or more vehicles first for the purpose of proceeds high power and time available for discharge determined based on an expected departure time of a user of each of one or more vehicles and a requested charging amount of each of one or ore vehicles.

According to an example embodiment, the electronic device 110 may discharge one or more vehicles based on a battery remaining level of each of one or more vehicles and configuration information for whether to allow discharging that is input by a user. For example, the electronic device 110 may identify the configuration information for whether to allow discharging that is input by the user, and discharge at least one vehicle configured to allow discharging. Alternatively, the electronic device 110 may be configured to discharge at least one vehicle in order for the battery remaining level of at least one vehicle configured to allow discharging to remain above the minimum battery remaining level that discharge is possible.

Meanwhile, specific example embodiments of the combined peak charging power of the bidirectional power conversion module 115, the peak charging power of each of the plurality of chargers 200, 220, 240, 260 and 280, the requested charging power of each of the plurality of chargers 200, 220, 240, 260 and 280, the combined peak discharging power of the bidirectional power conversion module 115, the peak discharging power of each of the plurality of chargers 200, 220, 240, 260 and 280, the requested discharging power of the plurality of chargers 200, 220, 240, 260 and 280, the priority of the plurality of chargers 200, 220, 240, 260 and 280, hourly charging fee, proceeds from discharging by time, and proceeds from discharging by purpose only pertain to example embodiments. It will be apparent to a person skilled in the art that the present disclosure may be implemented with example examples different from the example embodiments described above.

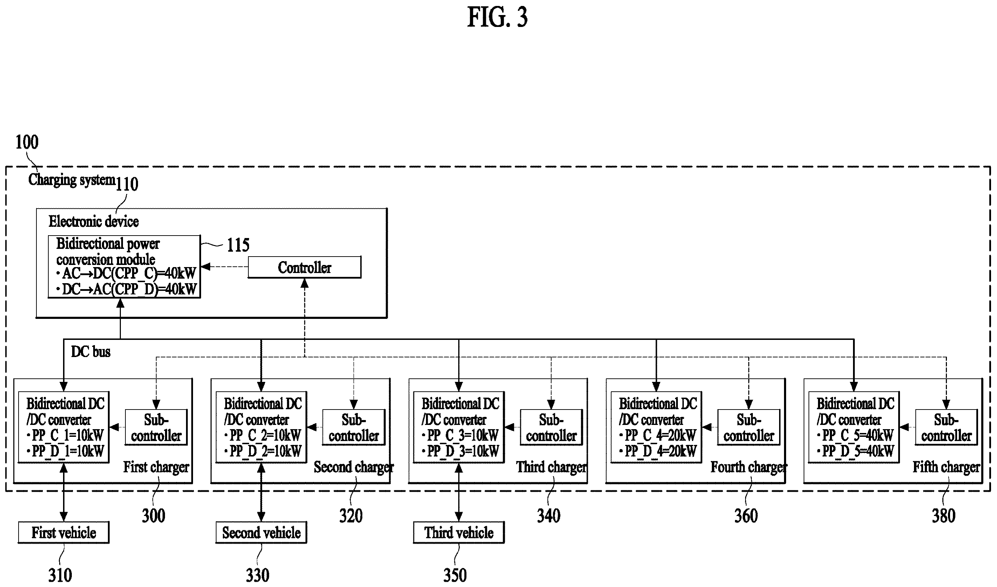

FIG. 3 is a drawing for explaining a process in which the electronic device 110 controls a plurality of chargers 300, 320, 340, 360 and 380 according to an example embodiment. Any content that overlaps with FIG. 2 will be briefly explained or omitted.

According to an example embodiment, the combined peak charging power of the bidirectional power conversion module 115 may be set to be less than or equal to the sum of peak charging power of each of the plurality of chargers 300, 320, 340, 360 and 380. For example, referring to FIG. 3, the peak charging power of the first charger 300, a second charger 320 and a third charger 340 may be 10 kW, the peak charging power of a fourth charger 360 may be 20 kW, and the peak charging power of a fifth charger 380 may be 40 kW. Accordingly, the combined peak charging power of the bidirectional power conversion module 115 may be set to 40 kW, which is less than 90 kW that is sum of peak charging power of each of the plurality of chargers 300, 320, 340, 360 and 380.

According to an example embodiment, among the plurality of chargers 300, 320, 340, 360 and 380, each of one or more vehicles 310, 330 and 350 may be connected to each of one or more chargers 300, 320 and 340 to be charged. For example, a first vehicle 310 may be connected to the first charger 300, a second vehicle 330 may be connected to the second charger 320, and a third vehicle 350 may be connected to the third charger 340.

According to an example embodiment, the electronic device 110 may charge one or more vehicles 310, 330 and 350 with the requested charging power of each of one or more chargers 300, 320 and 340, in response to identifying that that the sum of the chare request power of each of one or more chargers 300, 320 and 340 is less than the combined peak charging power of the bidirectional power conversion module 115. For example, the electronic device 110 may charge one or more vehicles 310, 330 and 350 with one or more chargers 300, 320 and 340, each with a requested charging power of 10 kW, in response to identifying that the sum of requested charging power of each of one or more chargers 300, 320 and 340 is 30 kW, which is less than the combined peak charging power of the bidirectional power conversion module 115, which is 40 kW.

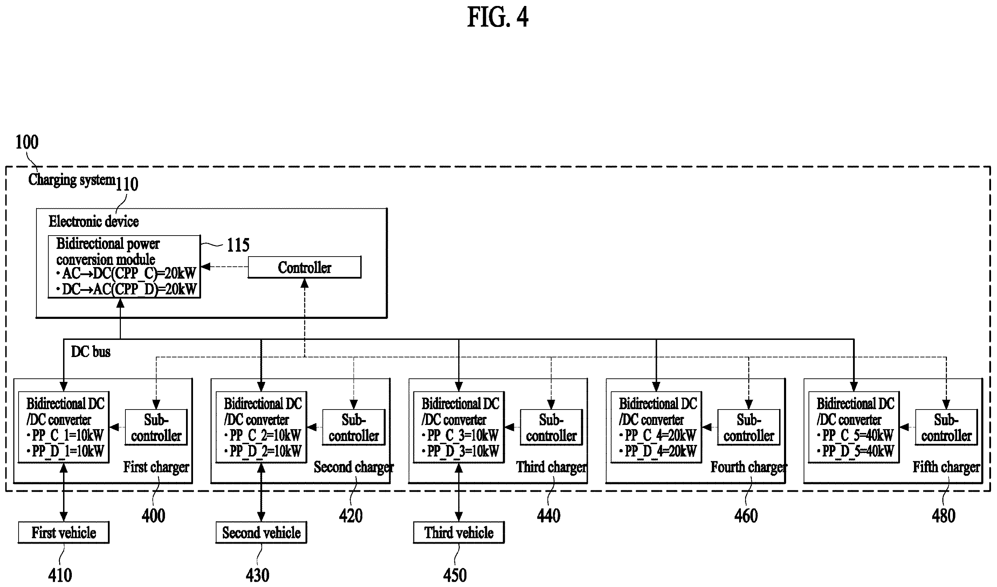

FIG. 4 is a drawing for explaining a process in which the electronic device 110 controls a plurality of chargers 400, 420, 440, 460 and 480 according to an example embodiment. Any content that overlaps with FIG. 2 will be briefly explained or omitted.

According to an example embodiment, the combined peak charging power of the bidirectional power conversion module 115 may be set to be less than or equal to the sum of peak charging power of each of the plurality of chargers 400, 420, 440, 460 and 480. For example, referring to FIG. 4, the peak charging power of a first charger 400, a second charger 420 and a third charger 440 may be 10 kW, the peak charging power of a fourth charger 460 may be 20 kW, and the peak charging power of a fifth charger 480 may be 40 kW. Accordingly, the combined peak charging power of the bidirectional power conversion module 115 may be set to 40 kW, which is less than the 90 kW of the peak charging power of each of the plurality of chargers 400, 420, 440, 460 and 480.

According to an example embodiment, the combined peak charging power and the combined peak discharging power of the bidirectional power conversion module 115 may change temporarily. For example, based on information received from the power grid or a building power management system or input from the manager, each of the combined peak charging power and the combined peak discharging power of the bidirectional power conversion module 115 may be temporarily changed from 40 kW to 20 kW.

According to an example embodiment, among the plurality of chargers 400, 420, 440, 460 and 480, each of one or more vehicles 410, 430 and 450 may be connected to each of one or more chargers 400, 420 and 440 to be charged. For example, a first vehicle 410 may be connected to the first charger 400, a second vehicle 430 may be connected to the second charger 420, and a third vehicle 450 may be connected to the third charger 440.

According to an example embodiment, the electronic device 110 may determine the priority of one or more vehicles 410, 430 and 450, in response to identifying that the sum of requested charging power of each of one or more chargers 400, 420 and 440 is greater than the combined peak charging power of the bidirectional power conversion module 115. For example, the electronic device 110 may determine the priority of one or more vehicles 410, 430 and 450, in response to identifying that the sum of the requested charging power of one or more chargers 400, 420 and 440 is 30 kW, which is greater than the combined peak charging power of the bidirectional power conversion module 115, which is 20 kW.

According to an example embodiment, the electronic device 110 may determine the priority of one or more vehicles 410, 430 and 450, based on at least one of the priority of one or more chargers 400, 420 and 440 to each of which each of one or more vehicles 410, 430 and 450 is connected to and the priority of a user of each of one or more vehicles 410, 430 and 450. For example, the electronic device 110 may determine that one or more vehicles 410, 430 and 450 have the same priority, in response to identifying that one or more chargers 400, 420 and 440 have the same priority and the priority of a user of each of one or more vehicles 410, 430 and 450 is the same.

According to an example embodiment, when the priorities of one or more vehicles 410, 430 and 450 are all the same, the electronic device 110 may charge one or more vehicles 410, 430 and 450 with the value obtained by dividing the combined peak charging power of the bidirectional power conversion module 115 by the number of vehicles (one or more vehicles 410, 430 and 450). For example, identifying that the priorities of one or more vehicles 410, 430 and 450 are all the same, the electronic device 110 may charge one or more vehicles 410, 430 and 450 with 6.5 kW, which is obtained by dividing 20 kW that is combined peak charging power of the bidirectional power conversion module 115 by 3, which is the number of one or more vehicles 410, 430 and 450.

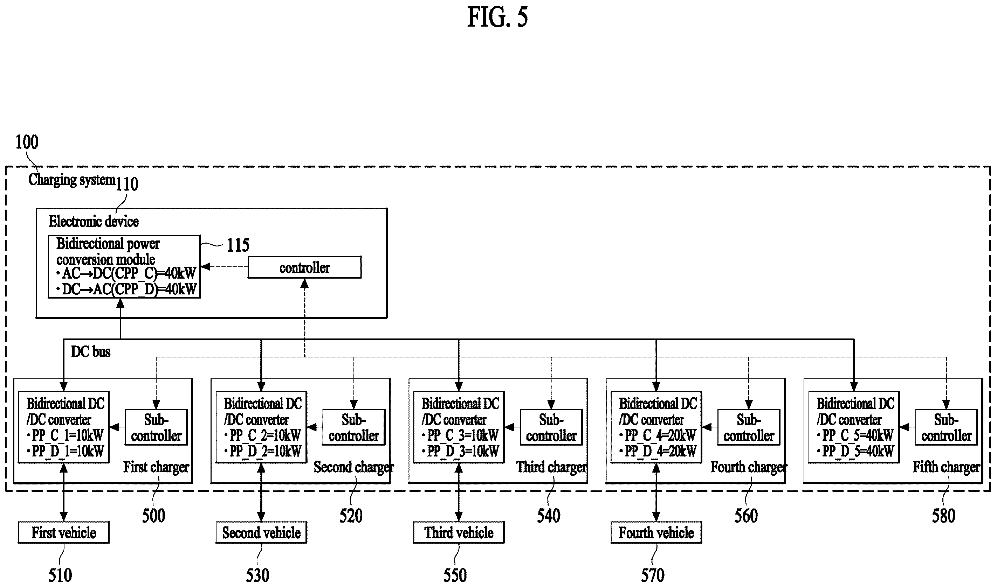

FIG. 5 is a drawing for explaining a process in which the electronic device 110 controls a plurality of chargers 500, 520, 540, 560 and 580 according to an example embodiment. Any content that overlaps with FIG. 2 will be briefly explained or omitted.

According to an example embodiment, the combined peak charging power of the bidirectional power conversion module 115 may be set to be less than or equal to the sum of peak charging power of each of the plurality of chargers 500, 520, 540, 560 and 580. For example, referring to FIG. 5, the peak charging power of a first charger 500, a second charger 520 and a third charger 540 may be 10 kW, the peak charging power of a fourth charger 560 may be 20 kW, and the peak charging power of the fifth charger 580 may be 40 kW. Accordingly, the combined peak charging power of the bidirectional power conversion module 115 may be set to 40 kW, which is less than the sum of the peak charging power of each of the plurality of chargers 500, 520, 540, 560 and 580, which is 90 kW.

According to an example embodiment, among the plurality of chargers 500, 520, 540, 560 and 580, each of one or more vehicles 510, 530, 550 and 570 may be connected to each of one or more chargers 500, 520, 540 and 560 to be charged. For example, a first vehicle 510 may be connected to the first charger 500, and a second vehicle 530 may be connected to the second charger 520. Further, a third vehicle 550 may be connected to the third charger 540, and a fourth vehicle 570 may be connected to the fourth charger 560.

According to an example embodiment, the electronic device 110 may determine the priority of one or more vehicles 510, 530, 550 and 570, in response to identifying that the sum of requested charging power of each of one or ore chargers 500, 520, 540 and 560 is greater than the combined peak charging power of the bidirectional power conversion module 115. For example, the electronic device 110 may determine the priority of one or more vehicles 510, 530, 550 and 570, in response to identifying that the sum of requested charging power of each of one or more chargers 500, 520, 540 and 560 is 50 kW, which is greater than the combined peak charging power of the bidirectional power conversion module 115, which is 40 kW.

According to an example embodiment, the electronic device 110 may determine the priority of one or more vehicles 510, 530, 550 and 570, based on at least one of the priority of one or more chargers 500, 520, 540 and 560 each of which each of one or more vehicles 510, 530, 550 and 570 is connected to, and the priority of a user of each of one or more vehicles 510, 530, 550 and 570. For example, in response to obtaining an input to select fast charging from a user of the fourth vehicle 570, the electronic device 110 may identify that the fourth charger 560 has higher priority than other chargers 500, 520 and 540. Further, in response to identifying that the priority of a user of each of one or more vehicles 510, 530, 550 and 570 is the same, the electronic device 110 may determine that the fourth vehicle 570 has higher priority than other vehicles 510, 530 and 550, and the vehicles 510, 530 and 550 have the same priority.

According to an example embodiment, when the priorities of one or more vehicles 510, 530, 550 and 570 are different, the electronic device 110 may charge at least one first vehicle of which priority is the highest among one or more vehicles 510, 530, 550 and 570 with the requested charging power of each corresponding charger. Further, the electronic device 110 may be configured to charge at least one second vehicle with the value obtained by dividing the power value obtained by subtracting the sum of the requested charging powers of the chargers each corresponding to at least one first vehicle from the combined peak charging power by the number of at least one second vehicle with the lowest priority.

For example, the electronic device 110 may charge the fourth vehicle 570 of which priority is the highest among one or more vehicles 510, 530, 550 and 570 with the requested charging power of the fourth charger 560, which is 20 kW. Further, the electronic device 110 may charge the lower priority vehicles 510, 530 and 550 with 6.5 kW that is obtained by dividing 20 kW that is obtained by subtracting 20kW of requested charging power of fourth charger 560 from 40kW of combined peak charging power of bidirectional power conversion module 115 by 3, which is the number of the vehicles 510, 530 and 550 with the low priority.

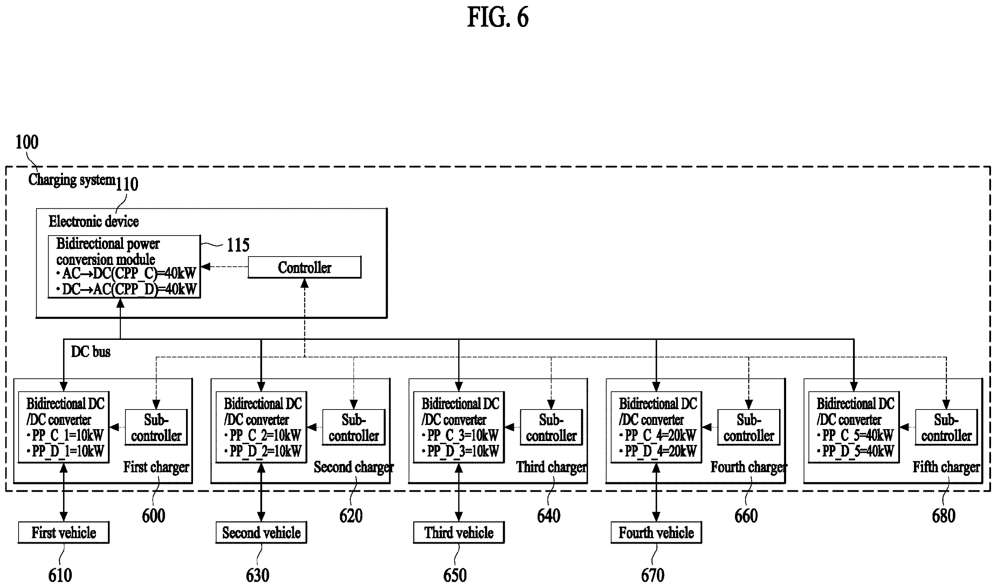

FIG. 6 is a drawing for explaining a process in which the electronic device 110 controls a plurality of chargers 600, 620, 640, 660 and 680 according to an example embodiment. Any content that overlaps with FIG. 2 will be briefly explained or omitted.

According to an example embodiment, the combined peak charging power of the bidirectional power conversion module 115 may be set to be less than or equal to the sum of peak charging power of each of the plurality of chargers 600, 620, 640, 660 and 680. For example, referring to FIG. 6, the peak charging power of a first charger 600, a second charger 620 and a third charger 640 may be 10 kW, the peak charging power of a fourth charger 660 may be 20 kW, and the peak charging power of a fifth charger 680 may be 40 kW. Accordingly, the combined peak charging power of the bidirectional power conversion module 115 may be set to 40 kW, which is less than the 90 kW that is the sum of peak charging power of each of the plurality of chargers 600, 620, 640, 660 and 680.

According to an example embodiment, among the plurality of chargers 600, 620, 640, 660 and 680, each of one or more vehicles 610, 630, 650 and 670 may be connected to each of one or more chargers 600, 620, 640 and 660 to be charged. For example, a first vehicle 610 may be connected to the first charger 600, and a second vehicle 630 may be connected to the second charger 620. Further, a third vehicle 650 may be connected to the third charger 640, and a fourth vehicle 670 may be connected to the fourth charger 660.

According to an example embodiment, the electronic device 110 may determine the priority of one or more vehicles 610, 630, 650 and 670, in response to identifying that the sum of requested charging power of each of one or more chargers 600, 620, 640 and 660 is greater than the combined peak charging power of the bidirectional power conversion module 115. For example, the electronic device 110 may determine the priority of one or more vehicles 610, 630, 650 and 670, in response to identifying that the sum of requested charging power of each of one or more chargers 600, 620, 640 and 660 is 50 kW, which is greater than the combined peak charging power of the bidirectional power conversion module 115, which is 40 kW.

According to an example embodiment, the electronic device 110 may determine the priority of one or more vehicles 610, 630, 650 and 670, based on at least one of the priorities of one or more chargers 600, 620, 640 and 660 each of which each of one or more vehicles 610, 630, 650 and 670 is connected to, and the priority of a user of each of one or more vehicles 610, 630, 650 and 670. For example, in response to obtaining an input of selecting fast charging from a user of the fourth vehicle 670, the electronic device 110 may identify that the fourth charger 660 has higher priority than other chargers 600, 620 and 640. Further, the electronic device 110 may identify that the user of the third vehicle 650 has higher priority than the users of other vehicles 610, 630 and 670. Accordingly, the electronic device 110 may determine that the third vehicle 650 and the fourth vehicle 670 have higher priority than the first vehicle 610 and the second vehicle 630.

Meanwhile, between the priority of a charger connected to a vehicle and the priority of a user of the vehicle, the priority in determining vehicle priority may vary depending on the system operator.

According to an example embodiment, when the priorities of one or more vehicles 610, 630, 650 and 670 are different, the electronic device 110 may charge at least one first vehicle of which priority is the highest among one or more vehicles 610, 630, 650 and 670 with the requested charging power of each corresponding charger. Further, the electronic device 110 is configured to charge at least one second vehicle with the value that is obtained by dividing the power value obtained by subtracting the sum of the requested charging powers of the chargers corresponding to at least one first vehicle respectively from the combined peak charging power by the number of at least one second vehicle with lower priority.

For example, among one or more vehicles 610, 630, 650 and 670, the electronic device 110 may charge the third vehicle 650 of which priority is high with the requested charging power of the third charger 640, which is 10 kW, and the fourth vehicle 670 of which priority is high with the requested charging power of the fourth charger 660, which is 20 kW. Further, the electronic device 110 may charge low priority vehicles 610 and 630 with 5 kW that is obtained by dividing 10 kW, which is obtained by subtracting 30kW that is the sum of 10kW, the requested charging power of the third charger 640 and 20kW, the requested charging power of the fourth charger 660 from 40kW, which is the combined peak charging power of bidirectional power conversion module 115, by 2, the number of vehicles 610 and 630 with lower priority.

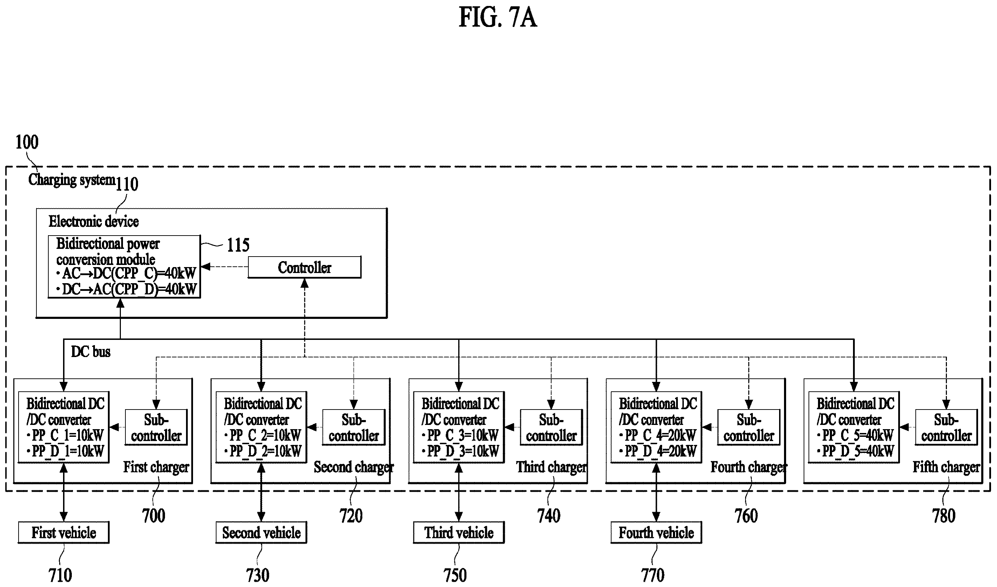

FIG. 7a to FIG. 7d are drawings illustrating a process in which the electronic device 110 controls a plurality of chargers 700, 720, 740, 760 and 780 according to an example embodiment. Any content that overlaps with FIG. 2 will be briefly explained or omitted.

According to an example embodiment, the combined peak charging power of the bidirectional power conversion module 115 may be set to be less than or equal to the sum of peak charging power of each of the plurality of chargers 700, 720, 740, 760 and 780. For example, referring to FIG. 7a, the peak charging power of a first charger 700, a second charger 720 and a third charger 740 may be 10 kW, the peak charging power of a fourth charger 760 may be 20 kW, and the peak charging power of a fifth charger 780 may be 40 kW. Accordingly, the combined peak charging power of the bidirectional power conversion module 115 may be set to 40 kW, which is less than 90 kW that is the sum of peak charging power of each of the plurality of chargers 700, 720, 740, 760 and 780.

According to an example embodiment, among the plurality of chargers 700, 720, 740, 760 and 780, each of one or more vehicles 710, 730, 750 and 770 may be connected to each of one or more chargers 700, 720, 740 and 760 to be charged. For example, a first vehicle 710 may be connected to the first charger 700, and a second vehicle 730 may be connected to the second charger 720. Further, a third vehicle 750 may be connected to the third charger 740, and a fourth vehicle 770 may be connected to the fourth charger 760.

According to an example embodiment, the electronic device 110 may identify the expected departure time of each user of one or more vehicles 710, 730, 750 and 770, and the requested charging amount for one or more vehicles 710, 730, 750 and 770. More specifically, the electronic device 110 may obtain an input regarding the expected departure time and the requested charging amount from a user of each of one or more vehicles 710, 730, 750 and 770. Alternatively, the electronic device 110 may obtain an input regarding an expected departure time and an estimated driving distance from a user of each of one or more vehicles 710, 730, 750 and 770, and may identify the requested charging amount of each of one or more vehicles 710, 730, 750 and 770 based on the estimated driving distance.

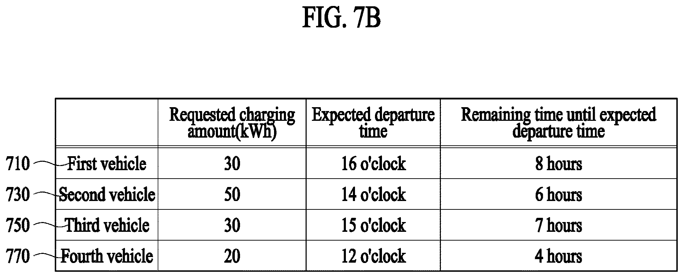

For example, referring to FIG. 7b, the user of the first vehicle 710 may enter 30 kWh as the requested charging amount and 16 o'clock as the expected departure time, and the user of the second vehicle 730 may enter 50 kWh as the requested charging amount and 14 o'clock as the expected departure time. Further, the user of the third vehicle 750 may enter 30 kWh as the requested charging amount and 15 o'clock as the expected departure time, and the user of the fourth vehicle 770 may enter 20 kWh as the requested charging amount and 12 o'clock as the expected departure time. Accordingly, the electronic device 110 may identify that 8 hours, 6 hours, 7 hours and 4 hours from the current time of 8 o'clock until the expected departure time of each of one or more vehicles 710, 730, 750 and 770.

**In** another example embodiment, a user of each of one or more vehicles 710, 730, 750 and 770 may input an estimated driving distance. The electronic device 110 may identify the requested charging amount of each of one or more vehicles 710, 730, 750 and 770, based on the estimated driving distance and fuel economy (km/kWh) of each of one or more vehicles 710, 730, 750 and 770.

According to an example embodiment, the electronic device 110 may identify the hourly charging fee. For example, the electronic device 110 may identify that the hourly charging fee is set in the order of a fourth fee (corresponding to 17~21 o'clock) > a third fee (corresponding to 8∼10 o'clock) > a second fee (corresponding to 10∼17 o'clock) > a first fee (corresponding to 21~8 o'clock).

According to an example embodiment, the electronic device 110 may determine the priority of one or more vehicles 710, 730, 750 and 770, in response to identifying that the sum of the requested charging power of each of one or more chargers 700, 720, 740 and 760 is greater than the combined peak charging power of the bidirectional power conversion module 115. For example, the electronic device 110 may determine the priority of one or more vehicles 710, 730, 750 and 770, in response to identifying that the sum of the requested charging power of each of one or more chargers 700, 720, 740 and 760 is 50 kW, which is greater than 40 kW, which is the combined peak charging power of the bidirectional power conversion module 115.

According to an example embodiment, the electronic device 110 may determine the priority of one or more vehicles 710, 730, 750 and 770, based on at least one of the priority of one or more chargers 700, 720, 740 and 760 each of which each of one or more vehicles 710, 730, 750 and 770 is connected to, and the priority of a user of each of one or more vehicles 710, 730, 750 and 770. For example, in response to obtaining an input for selecting fast charging from a user of the fourth vehicle 770, the electronic device 110 may identify that the fourth charger 760 has higher priority than other chargers 700, 720 and 740. Further, in response to identifying that the priority of a user of each of one or more vehicles 710, 730, 750 and 770 is the same, the electronic device 110 may determine that the fourth vehicle 770 has higher priority than the other vehicles 710, 730 and 750, and the other vehicles 710, 730 and 750 have the same priority.

According to an example embodiment, the electronic device 110 may charge one or more vehicles 710, 730, 750 and 770 based on the priority of one or more vehicles 710, 730, 750 and 770, an expected departure time of a user of each of one or more vehicles 710, 730, 750 and 770, a requested charging amount of each of one or more vehicles 710, 730, 750 and 770, and an hourly charging fee. More specifically, the electronic device 110 may charge one or more vehicles 710, 730, 750 and 770 in order that one or more vehicles 710, 730, 750 and 770 are charged up to the requested charging amount before each user's expected departure time and at the same time the charging fee for each of the vehicles 710, 730, 750 and 770 becomes the minimum.

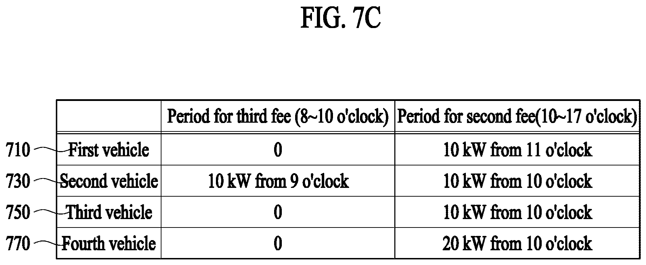

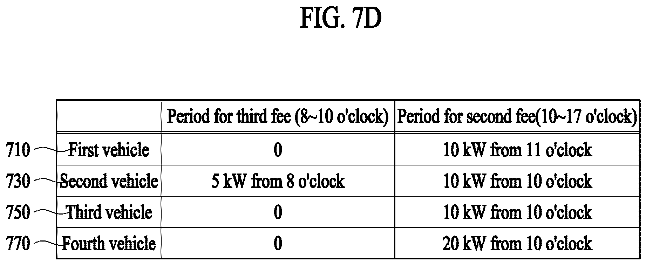

For example, referring to FIG. 7c and FIG. 7d, the electronic device 110 may identify that one or more vehicles 710, 730, 750 and 770 must be charged during the period time for the third fee plan (8 o'clock to 10 o'clock) or the period time for the second fee plan (10 o'clock to 17 o'clock) since remaining time until the expected departure time is 8 hours, 6 hours, 7 hours and 4 hours for each of one or more vehicles 710, 730, 750 and 770. Here, the electronic device 110 may charge one or more vehicles 710, 730, 750 and 770 at priority in the low-fee period time for the second fee plan (10 o'clock to 17 o'clock), in order to minimize the charging fee that is charged to each of one or more vehicles 710, 730, 750 and 770.

However, since the sum of the requested charging powers of each of one or more chargers 700, 720, 740 and 760 is greater than the combined peak charging power of the bidirectional power conversion module 115, the electronic device 110 may charge the high priority fourth vehicle 770 from 10 o'clock to 11 o'clock with the requested charging power of the fourth charger 760, which is 20 kW. Further, even though the first vehicle 710, the second vehicle 730 and the third vehicle 750 have the same priority, since the second vehicle 730 has a higher requested charging amount than the other vehicles 710 and 750 and has less time left until the expected departure time, the electronic device 110 may charge the second vehicle 730 from 10 o'clock to 14 o'clock with the requested charging power of the second charger 720, which is 10 kW. Even though the first vehicle 710 and the third vehicle 750 have the same priority and the requested charging amount is the same, since the time remaining until the expected departure time of the third vehicle 750 is shorter than that of the first vehicle 710, the electronic device 110 may charge the third vehicle 750 from 10 o'clock to 13 o'clock with the requested charging power of the third charger 740, which is 10 kW. After then, as the electronic device 110 completes charging the fourth vehicle 770, the first vehicle 710 may be charged from 11 o'clock to 14 o'clock with the requested charging power of the first charger 700, which is 10 kW.

Meanwhile, even if the electronic device 110 charges the second vehicle 730 with the requested charging power of 10 kW of the second charger 720 from 10 o'clock to 14 o'clock, which is the expected departure time, it may not charge the requested charging amount of 50 kWh of the second vehicle 730, and thus the electronic device 110 may charge the second vehicle 730 during high fee period time for the third fee plan (8 o'clock to 10 o'clock). As illustrated in FIG. 7c, the electronic device 110 may charge the second vehicle 730 from 9 o'clock to 10 o'clock with the requested charging power of the second charger 720, which is 10 kW, or as illustrated in FIG. 7d, the second vehicle 730 may be charged from 8 o'clock to 10 o'clock at 5 kW, which is lower than the requested charging power of the second charger 720. Here, in preparation for a situation where the charging system 100 needs to be discharged before 9 o'clock, the electronic device 110 may be configured to charge the second vehicle 730 as illustrated in FIG. 7d, but is not limited to what is described above.

In another example embodiment, the electronic device 110 may charge one or more vehicles 710, 730, 750 and 770, taking into account the minimum charging power. In case a situation arises where discharge is necessary, the electronic device 110 may charge the first vehicle 710, the third vehicle 750 and the fourth vehicle 770 with the minimum charging power even in the period time for the third fee plan (8 o'clock to 10 o'clock).

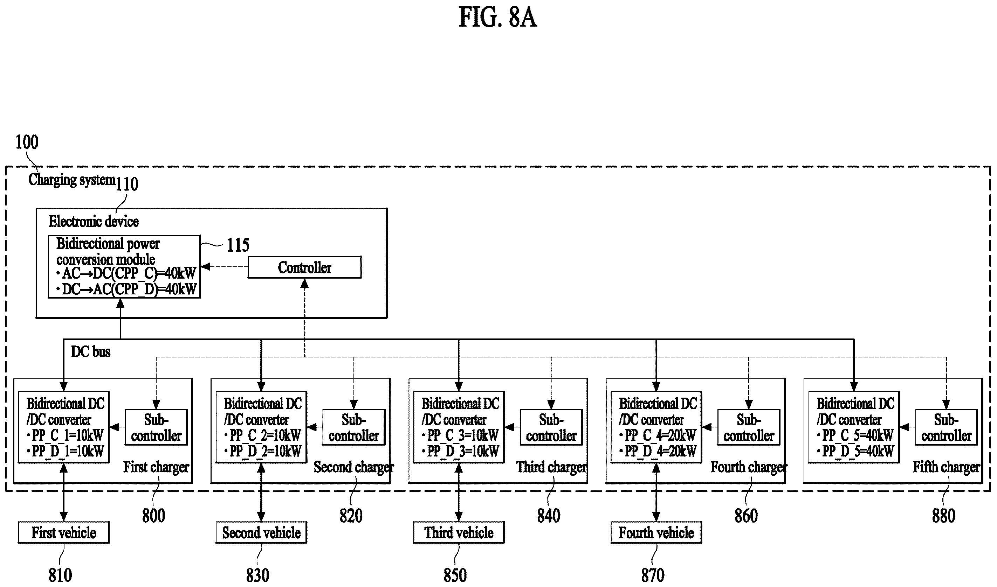

FIG. 8a to FIG. 8c are drawings illustrating a process in which the electronic device 110 controls a plurality of chargers 800, 820, 840, 860 and 880 according to an example embodiment. Any content that overlaps with FIG. 7a to FIG. 7d will be briefly explained or omitted.

According to an example embodiment, the combined peak charging power of the bidirectional power conversion module 115 may be set to be less than or equal to the sum of peak charging power of each of the plurality of chargers 800, 820, 840, 860 and 880. For example, referring to FIG. 8a, the peak charging power of a first charger 800, a second charger 820 and a third charger 840 may be 10 kW, the peak charging power of a fourth charger 860 may be 20 kW, and the peak charging power of a fifth charger 880 may be 40 kW. Accordingly, the combined peak charging power of the bidirectional power conversion module 115 may be set to 40 kW, which is less than the 90 kW sum of peak charging power of each of the plurality of chargers 800, 820, 840, 860 and 880.

According to an example embodiment, among the plurality of chargers 800, 820, 840, 860 and 880, each of one or more vehicles 810, 830, 850 and 870 may be connected to each of one or more chargers 800, 820, 840 and 860 to be charged. For example, a first vehicle 810 may be connected to the first charger 800, and a second vehicle 830 may be connected to the second charger 820. Further, a third vehicle 850 may be connected to the third charger 840, and a fourth vehicle 870 may be connected to the fourth charger 860.

According to an example embodiment, the electronic device 110 may identify the expected departure time of a user each of one or more vehicles 810, 830, 850 and 870 and the requested charging amount of each of one or more vehicles 810, 830, 850 and 870. For example, as described above with respect to FIG. 7b, the electronic device 110 may identify an input regarding expected departure time and requested charging amount from a user of each of one or more vehicles 810, 830, 850 and 870, and may identify the time remaining until the expected departure time of each of one or more vehicles 810, 830, 850 and 870 based thereon.

According to an example embodiment, the electronic device 110 may identify the hourly charging fee. For example, the electronic device 110 may identify that the hourly charging fee is set in the order of a fourth fee (corresponding to 17~21 o'clock) > a third fee (corresponding to 8∼10 o'clock) > a second fee (corresponding to 10∼17 o'clock) > a first fee (corresponding to 21~8 o'clock).

According to an example embodiment, in response to identifying that the sum of requested charging power of each of one or more chargers 800, 820, 840 and 860 is greater than the combined peak charging power of the bidirectional power conversion module 115, the electronic device 110 may determine the priority of one or more vehicles 810, 830, 850 and 870. For example, in response to identifying that the sum of requested charging power of each of one or more chargers 800, 820, 840 and 860 is 50 kW, which is greater than the combined peak charging power of the bidirectional power conversion module 115, which is 40 kW, the electronic device 110 may determine the priority of one or more vehicles 810, 830, 850 and 870.

According to an example embodiment, the electronic device 110 may determine the priority of one or more vehicles 810, 830, 850 and 870, based on at least one of the priority of one or more chargers 800, 820, 840 and 860 each of which each of one or more vehicles 810, 830, 850 and 870 is connected to, and the priority of a user of each of one or more vehicles 810, 830, 850 and 870. For example, in response to obtaining an input for selecting fast charging from a user of the fourth vehicle 870, the electronic device 110 may identify that the fourth charger 860 has higher priority than other chargers 800, 820 and 840. Further, in response to identifying that the priority of a user of each of one or more vehicles 810, 830, 850 and 870 is the same, the electronic device 110 may determine that the fourth vehicle 870 has higher priority than the other vehicles 810, 830 and 850, and the other vehicles 810, 830 and 850 have the same priority.

According to an example embodiment, the electronic device 110 may charge one or more vehicles 810, 830, 850 and 870 based on the priority of one or more vehicles 810, 830, 850 and 870, the expected departure time of a user of each of one or more vehicles 810, 830, 850 and 870, requested charging amount of each of one or more vehicles 810, 830, 850 and 870 and an hourly charging fee.

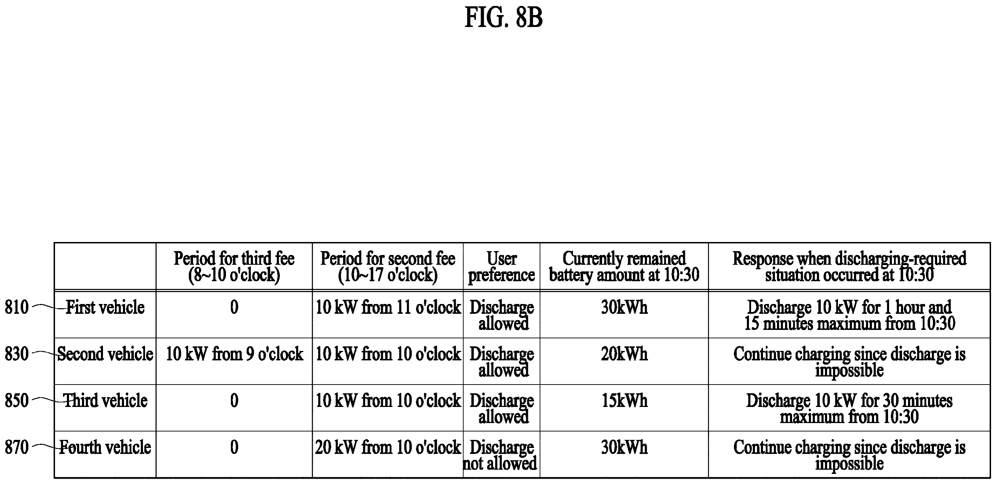

For example, referring to FIG. 8b, as described above with respect to FIG. 7c, the electronic device 110 may charge the first vehicle 810 from 11 o'clock to 14 o'clock with the requested charging power of the first charger 800, which is 10 kW, and charge the second vehicle 830 from 9 o'clock to 14 o'clock with the requested charging power of the second charger 820, which is 10 kW. Further, the electronic device 110 may charge the third vehicle 850 from 10 o'clock to 13 o'clock with the requested charging power of the third charger 840, which is 10 kW, and charge the fourth vehicle 870 from 10 o'clock to 11 o'clock with the requested charging power of the fourth charger 860, which is 20 kW.

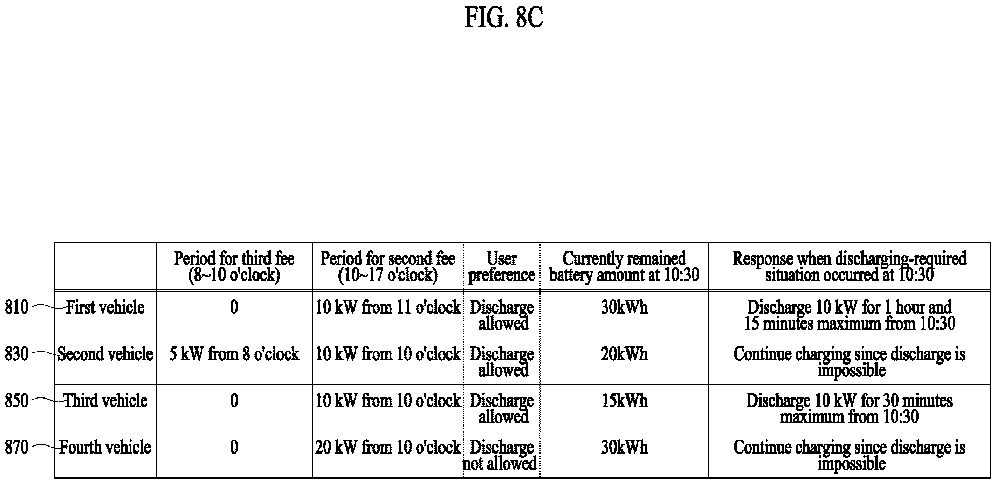

In another example embodiment, referring to FIG. 8c, as described above with respect to FIG. 7d, the electronic device 110 may charge the first vehicle 810 from 11 o'clock to 14 o'clock with the requested charging power of the first charger 800, which is 10 kW, charge the second vehicle 830 from 8 o'clock to 10 o'clock at 5 kW, which is less than the requested charging power of the second charger 820, and charge from 10 o'clock to 14 o'clock with the requested charging power of the second charger 820, which is 10 kW. Further, the electronic device 110 may charge the third vehicle 850 from 10 o'clock to 13 o'clock with the requested charging power of the third charger 840, which is 10 kW, and charge the fourth vehicle 870 from 10 o'clock to 11 o'clock with the requested charging power of the fourth charger 860, which is 20 kW.

According to an example embodiment, the electronic device 110 may identify that a discharging-required situation occurred while charging one or more vehicles 810, 830, 850 and 870. For example, the electronic device 110 may determine that discharge is necessary at 10:30 at which one or more vehicles 810, 830, 850 and 870 are being charged.

According to an example embodiment, the electronic device 110 may identify configuration information of the user for whether to allow discharging of each of one or more vehicles 810, 830, 850 and 870. More specifically, the electronic device 110 may identify configuration information for whether to allow discharging that is input by the user of each of one or more vehicles 810, 830, 850 and 870. For example, referring to FIG. 8b and FIG. 8c, the electronic device 110 may identify an input from a user to set to allow discharge of the first vehicle 810, the second vehicle 830 and the third vehicle 850. Alternatively, the electronic device 110 may identify an input of a user to set the fourth vehicle 870 not to be discharged.

According to an example embodiment, when a discharge requirement occurs while charging one or more vehicles 810, 830, 850 and 870, the electronic device 110 may be configured to discharge at least one vehicle that is set to be allowed for discharge among one or more vehicles 810, 830, 850 and 870 within its respective maximum discharging available time. For example, referring to FIG. 8b and FIG. 8c, the electronic device 110 may discharge the first vehicle 810, the second vehicle 830 and the third vehicle 850 that is set to be allowed for discharge within their respective maximum discharging available times among one or more vehicles 810, 830, 850 and 870.

According to an example embodiment, the electronic device 110 may determine the maximum discharging available time of the vehicle as the smaller between 1) the time that is obtained by dividing the value obtained by subtracting the minimum dischargeable battery remaining level from the current battery remaining level of the vehicle by the peak discharging power of the charger to which the vehicle is connected and 2) the time that is obtained by dividing by 2 the time that is obtained by subtracting the time obtained by dividing the vehicle's requested charging amount by the requested charging power of the charger to which the vehicle is connected and the current time or vehicle charging start time from the vehicle user's expected departure time.

In other words, assuming that the vehicle is discharged by peak discharging power of the connected charger, the maximum discharging available time of the vehicle may be determined as the smaller between the first discharge possible time and the second discharge possible time below.

The first discharge possible time = (vehicle's current battery remaining level - minimum dischargeable battery remaining level)/peak discharging power

The second discharge possible time = (vehicle's expected departure time - requested charging amount/charge request power - (current time or charging start time))/2

With regard to the first discharge possible time, the minimum dischargeable battery remaining level may be set in order to ensure that the vehicle's battery remaining level does not fall below the minimum battery remaining level required for the vehicle to operate, to prepare for various situations such as a situation where the user needs to use the vehicle while it is being charged. Accordingly, in order for the vehicle to be discharged in the condition where the vehicle's battery remaining level does not fall below the minimum battery remaining level at which discharge is possible, the electronic device 110 may obtain the first discharge possible time by dividing a value obtained by subtracting the minimum dischargeable battery remaining level from the current battery remaining level of the vehicle by the peak discharging power of the charger to which the vehicle is connected.

With regard to the second discharge possible time, in order for the vehicle to be discharged in the condition where the vehicle's requested charging amount is fully charged before the vehicle departs, when the vehicle is being charged, the electronic device 110 may obtain the third time by subtracting the time obtained by dividing the vehicle's requested charging amount by the requested charging power of the charger to which the vehicle is connected and the vehicle charging start time from the expected departure time of the vehicle. Alternatively, when charging the current vehicle is not started, the electronic device 110 may obtain the third time by subtracting the time obtained by dividing the vehicle's requested charging amount by the requested charging power of the charger to which the vehicle is connected and the current time from the expected departure time of the vehicle. After then, based on that the discharged power amount needs to be recharged, the electronic device 110 may obtain the second discharge possible time by dividing the third time by 2.

Accordingly, the maximum discharging available times of the first vehicle 810, the second vehicle 830, and the third vehicle 850 may be calculated as follows. Here, the minimum dischargeable battery remaining level may be set to 10 kWh.

For example, in the case of the first vehicle 810, the first possible discharge time may be determined as: (vehicle's current battery remaining level - minimum dischargeable battery remaining level)/peak discharging power = (30 kWh - 10 kWh)/10 kW = 2. Further, since the first vehicle 810 did not start charging at 10:30, the second discharge possible time may be determined as: (the expected departure time of vehicle - requested charging amount/charge request power - current time)/2 = (16 o'clock - 30 kWh/10 kW - 10:30)/2 = 2 hours 30 minutes/2 = 1 hour and 15 minutes. Therefore, the maximum discharging available time of the first vehicle 810 may be determined as 1 hour and 15 minutes, which is the smaller between the first discharge possible time and the second discharge possible time. Accordingly, the electronic device 110 may discharge the first vehicle 810 with 10 kW for up to 1 hour and 15 minutes from 10:30.

**In** another example embodiment, in the case of the second vehicle 830, the first possible discharge time may be determined as: (vehicle's current battery remaining level - minimum dischargeable battery remaining level)/peak discharging power = (20 kWh - 10 kWh)/10 kW = 1 hour. Further, since the second vehicle 830 is charging at 10:30, the second discharge possible time may be determined as: (vehicle's expected departure time - requested charging amount/charge request power - charging start time)/2 = (14 o'clock - 50 kWh/10 kW - 9 o'clock)/2 = 0 hour. Therefore, the maximum discharging available time of the second vehicle 830 may be determined as 0 hour, which is the smaller between the first discharge possible time and the second discharge possible time. Accordingly, the electronic device 110 may continue charging the second vehicle 830 without discharging it.

**In** another example embodiment, in the case of the third vehicle 850, the first possible discharge time may be determined as: (vehicle's current battery remaining level - minimum dischargeable battery remaining level)/peak discharging power = (15 kWh - 10 kWh)/10 kW = 30 minutes. Further, since the third vehicle 850 is charging at 10:30, the second discharge possible time may be determined as: (vehicle's expected departure time - requested charging amount/charge request power - charging start time)/2 = (15 o'clock - 30 kWh/10 kW - 10 o'clock)/2 = 2 hours/2 = 1 hour. Therefore, the maximum discharging available time of the third vehicle 850 may be determined as 30 minutes, which is the smaller of the first discharge possible time and the second discharge possible time. Accordingly, the electronic device 110 may discharge the third vehicle 850 with 10 kW for up to 30 minutes from 10:30.

However, since the second discharge possible time is calculated under the assumption that the vehicle is charged with the charger's requested charging power, when the vehicle is not actually charged with the charger's requested charging power, the formula for calculating the second discharge possible time may be modified as follows.

The second discharge possible time = (vehicle's expected departure time - ∑ charge amount/charging power - (current time or charging start time))/2.

For example, referring to FIG. 8c, since the second vehicle 830 is charged at 5 kW that is the requested charging power, instead of 10 kW, from 8 to 10 o'clock, the second discharge possible time may be determined as: (vehicle's expected departure time - ∑charge amount/charging power - (charging start time))/2 = (14 o'clock - (10 kWh/5 kW + 40 kWh/10 kW) - 8 o'clock)/2 = (14 o'clock - (2 hours + 4 hours) - 8 o'clock) = 0 hour.

FIG. 9a to FIG. 9b are drawings illustrating a process in which the electronic device 110 controls a plurality of chargers 900, 920, 940, 960 and 980 according to an example embodiment.

According to an example embodiment, the electronic device 110 may further include a meter 125 (or power/frequency meter) in addition to the bidirectional power conversion module 115 and the controller 120. The meter 125 may measure the amount of AC power in the entire charging system 100 that is charged or discharged through the bidirectional power conversion module 115, or the amount of charging power or discharging power of the bidirectional power conversion module 115. Further, as a meter that satisfies the measurement criteria for frequency response, the meter 125 may have frequency and power measurement precision and accuracy suitable for performing frequency adjustment function.

According to an example embodiment, each of the plurality of chargers 900, 920, 940, 960 and 980 may further include a Watt-hour meter (Watt-hour meters 905, 925, 945, 965 and 985) in addition to a bidirectional DC/DC converter and a sub-controller. Each of the plurality of Watt-hour meters 905, 925, 945, 965 and 985 may measure the power and amount of power charged to or discharged from the vehicle through a bidirectional DC/DC converter.

According to an example embodiment, using the meter 125 and the plurality of Watt-hour meters 905, 925, 945, 965 and 985, the electronic device 110 may accurately measure the total amount of power and energy delivered through the charge or discharge of an electric vehicle battery. Accordingly, through the measured charge or discharge amount, the electronic device 110 may more accurately and fairly settle costs or compensation for vehicles 910, 930, 950 and 970 connected to each of the plurality of chargers 900, 920, 940, 960 and 980.

According to an example embodiment, using the meter 125 and the plurality of Watt-hour meters 905, 925, 945, 965 and 985, the electronic device 110 may accurately measure rapidly changing frequency changes, and may control the charge or discharge of one or more vehicles 910, 930, 950 and 970 based on the measured power values. More specifically, when the electronic device 110 identifies a frequency fluctuation of +0.02~0.05 Hz, the electronic device 110 may charge at least one vehicle among one or more vehicles 910, 930, 950 and 970, and when the electronic device 110 identifies a frequency fluctuation of -0.02 to 0.05 Hz, the electronic device 110 may discharge at least one of one or more vehicles 910, 930, 950 and 970.

Here, in frequency response, the electronic device 110 may control the charge or discharge of one or more vehicles 910, 930, 950 and 970, based on at least one of the combined peak charging power of the bidirectional power conversion module 115, the peak charging power of each of the plurality of chargers 900, 920, 940, 960 and 980, the requested charging power of each of the plurality of chargers 900, 920, 940, 960 and 980, the combined peak discharging power of the bidirectional power conversion module 115, the peak discharging power of each of the plurality of chargers 900, 920, 940, 960 and 980, the requested discharging power of each of the plurality of chargers 900, 920, 940, 960 and 980, the priority of each of one or more chargers 900, 920, 940 and 960, the priority of a user of each of one or more vehicles 910, 930, 950 and 970, the expected departure time, of a user of each of one or more vehicles 910, 930, 950 and 970, an hourly charging fee, proceeds from discharging by time, proceeds from discharging by purpose, the battery remaining level of each of one or more vehicles 910, 930, 950 and 970, the requested charging amount of each of one or more vehicles 910, 930, 950 and 970, configuration information of a user for whether to allow discharging and the frequency response duration (for example, 10 minutes).

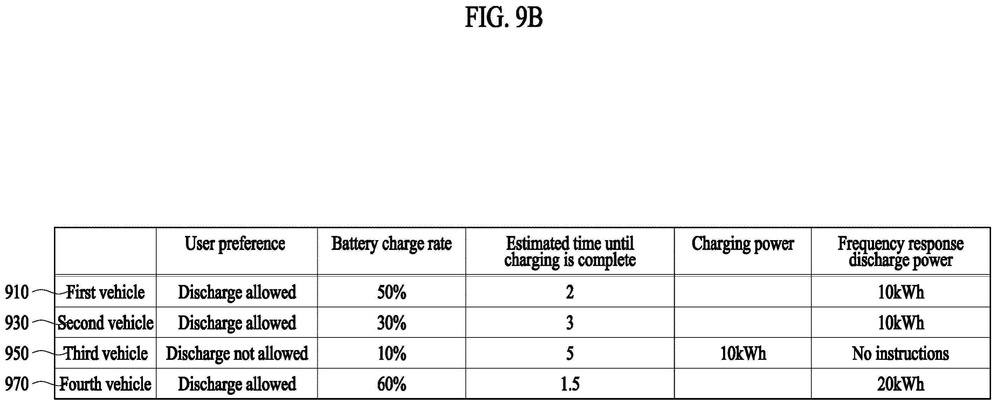

For example, referring to FIG. 9b, the electronic device 110 may discharge a first vehicle 910, a second vehicle 930 and a fourth vehicle 970, which are set for discharge to be allowed, by identifying the negative frequency fluctuation, among one or more vehicles 910, 930, 950 and 970. Further, based on the battery charge rate and estimated time until charging is complete for each of the first vehicle 910, the second vehicle 930 and the fourth vehicle 970, the electronic device 110 may discharge the first vehicle 910, the second vehicle 930 and the fourth vehicle 970 with 10 kW, 10 kW and 20 kW respectively. Meanwhile, the electronic device 110 may continuously charge a third vehicle 950 with a discharge-free setting at 10 kW. Accordingly, the frequency response power of the entire charging system 100 may be 30 kW.

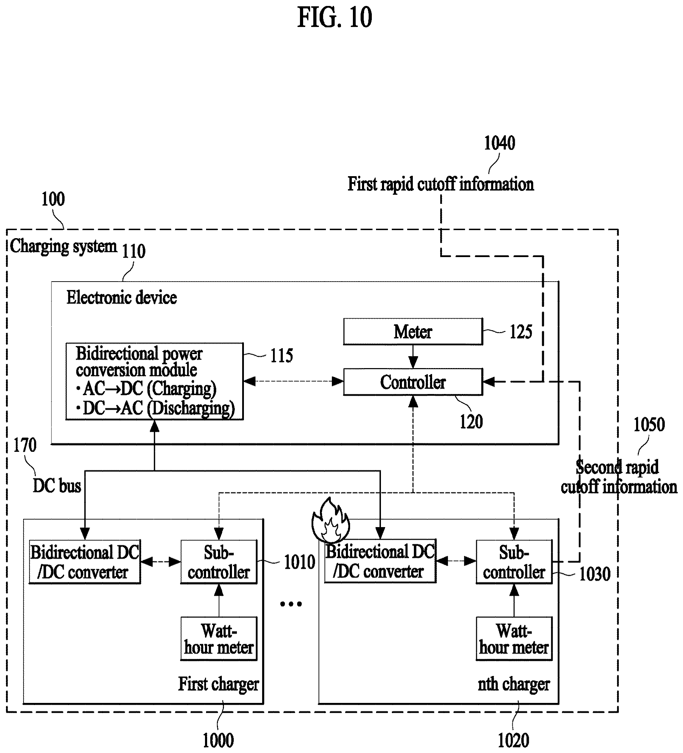

FIG. 10 is a drawing for explaining the process of the electronic device 110 reducing the voltage of the DC bus 170 according to an example embodiment.

According to an example embodiment, the electronic device 110 may identify rapid cutoff information 1040 and 1050. For example, the electronic device 110 may receive first rapid cutoff information 1040 from an external source according to an operator's operation, such as pressing an emergency stop button. Alternatively, the electronic device 110 may receive second rapid cutoff information 1050 from an automatic detection system based on sensors of a plurality of chargers 1000 and 1020.

According to an example embodiment, the electronic device 110 may reduce the voltage of the DC bus 170 by controlling the bidirectional power conversion module 115 and a plurality of sub-controllers 1010 and 1030 in response to identifying the rapid cutoff information 1040 and 1050. For example, the electronic device 110 may reduce the voltage of the DC bus 170 to a safe level of 60 V or less after identifying the rapid cutoff information 1040 and 1050. Accordingly, the electronic device 110 may prevent electric shock accidents caused by arcing or ground faults that may occur secondarily in emergency situations such as fire on the DC bus 170 where high voltage power of 100V~1000V is transmitted.

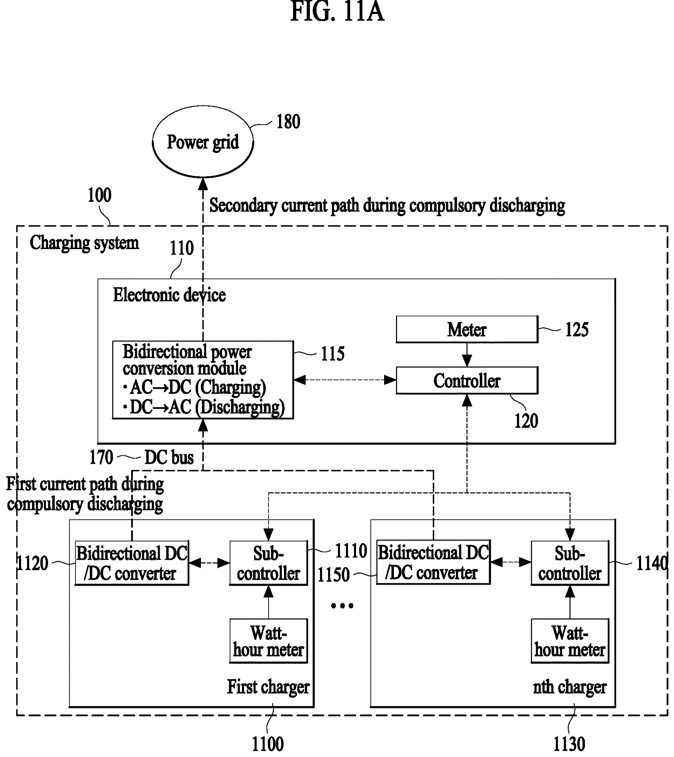

Meanwhile, described in detail with reference to FIG. 11a to FIG. 14c are example embodiments in which the electronic device 110 reduces the voltage of the DC bus 170 by controlling the bidirectional power conversion module 115 and the plurality of sub-controllers 1010 and 1030.

FIG. 11a to FIG. 11b are drawings for explaining a process in which the electronic device 110 reduces the voltage of a DC bus 170 according to an example embodiment.

According to an example embodiment, the charging system 100 may include the electronic device 110, a plurality of chargers 1100 and 1130 and the DC bus 170. The controller 120 included in the electronic device 110 may reduce the voltage of the DC bus 170 by controlling the bidirectional power conversion module 115 and a plurality of sub-controllers 1110 and 1140.

According to an example embodiment, the electronic device 110 may identify the rapid cutoff information. For example, the electronic device 110 may receive first rapid cutoff information from an external source according to operator operation, or receive second rapid cutoff information from an automatic detection system based on sensors of the plurality of chargers 1100 and 1130.

According to an example embodiment, the electronic device 110 may reduce the voltage of the DC bus 170 by controlling the bidirectional power conversion module 115 and the plurality of sub-controllers 1110 and 1140 in response to identifying the rapid cutoff information. For example, the electronic device 110 may discharge the output voltage of the plurality of chargers 1100 and 1130 through the DC bus 170 by controlling the plurality of sub-controllers 1110 and 1140. After then, the electronic device 110 may discharge the voltage of the DC bus 170 to the power grid 180 through the bidirectional power conversion module 115 by controlling the bidirectional power conversion module 115.

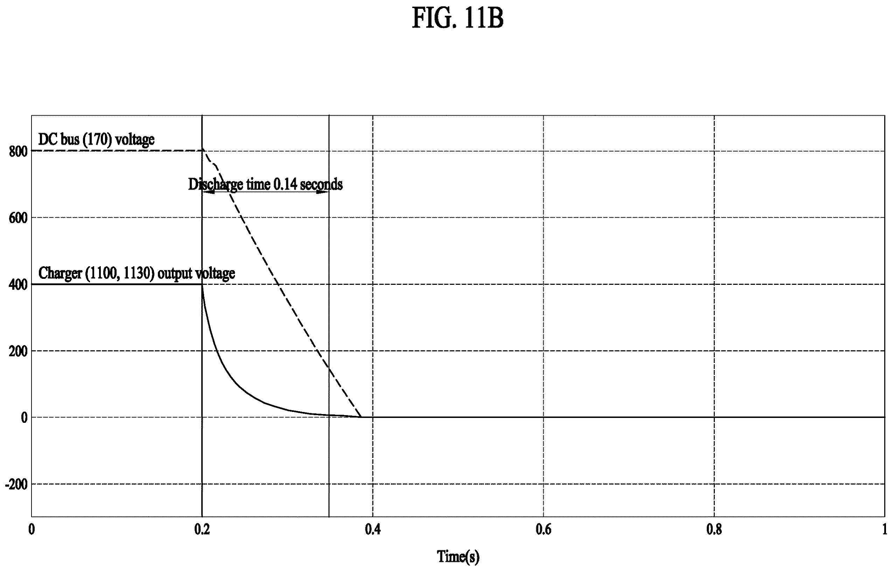

FIG. 11b illustrates the result of reducing the voltage of the DC bus 170 of the electronic device 110 according to an example embodiment. Here, the peak discharging power of the bidirectional power conversion module 115 may be set to 50 kW, and the charging system 100 may be configured to include five chargers 1100 and 1130. Further, in case of emergency, the voltage of the DC bus 170 may be set to 800 V, and the output voltage of the chargers 1100 and 1130 may be set to 400V.

The electronic device 110 may reduce the voltage of the DC bus 170 to below 60 V within 0.2 seconds, and reduce the voltage of the chargers 1100 and 1130 to below 60 V in less than 0.14 seconds, by compulsory discharging the output voltage of the plurality of chargers 1100 and 1130 through the DC bus 170, and by compulsory discharging the voltage of the DC bus 170 to the power grid 180 through the bidirectional power conversion module 115.

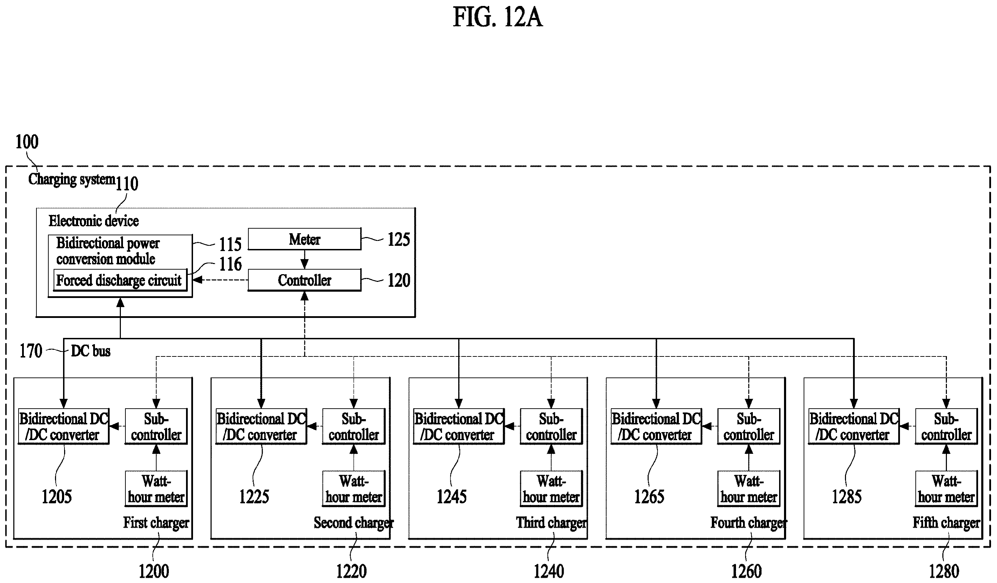

In other words, when the rapid shutdown function is implemented according to the example embodiment, when a rapid shutdown command is issued, the voltage of the DC bus within the system may decrease below the safe level of 60 V, and satisfied may be the international standard (IEC61851-23) and the domestic standard (KC61851-23) that require that the charger output voltage be reduced to less than 60 V within 1 second after power failure. Further, unlike what will be described later with respect to FIG. 12a to FIG. 13c, according to the example embodiment, the rapid shutdown function is implemented without a separate resistor circuit for compulsory discharging, and thus implementation costs may be reduced.

FIG. 12a to FIG. 12c are drawings for explaining the process of the electronic device 110 reducing the voltage of the DC bus 170 according to an example embodiment.

According to an example embodiment, the charging system 100 may include the electronic device 110, a plurality of chargers 1200, 1220, 1240, 1260 and 1280 and the DC bus 170. The controller 120 included in the electronic device 110 may reduce the voltage of the DC bus 170 by controlling the bidirectional power conversion module 115.

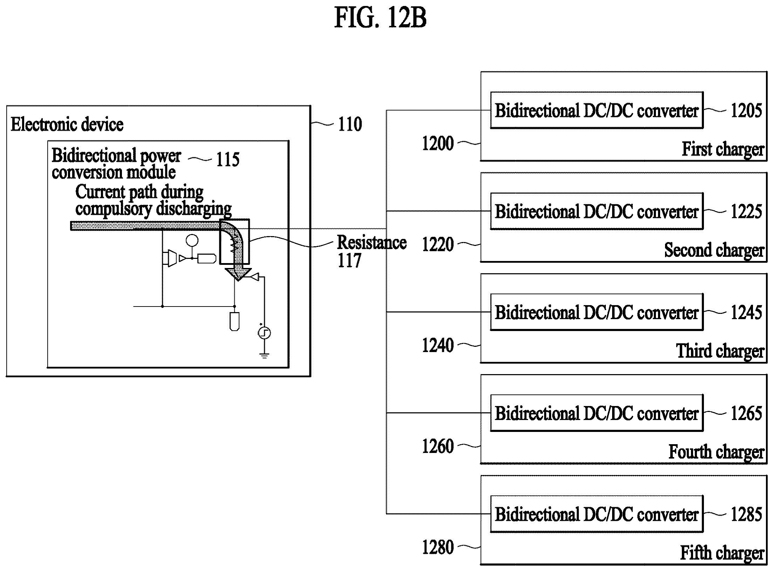

According to an example embodiment, the bidirectional power conversion module 115 of the electronic device 110 may include a forced discharge circuit 116. For example, referring to FIG. 12b, the bidirectional power conversion module 115 may include a resistance 117 for compulsory discharging. Here, as the resistance 117, used may be a resistance with 381 mm length, outer diameter (O.D.) 63.5mm, inner diameter (I.D.) 44.5mm and power capacity 1 kW. However, the specifications of resistance, which may be used, are not limited to the above.

Meanwhile, FIG. 12a and FIG. 12b illustrate that the bidirectional power conversion module 115 includes the forced discharge circuit 116, but the forced discharge circuit 116 may be externally outside the bidirectional power conversion module 115. For example, as a separate module, the forced discharge circuit 116 may be controlled by the controller 120 by being included in the electronic device 110.

According to an example embodiment, the electronic device 110 may identify the rapid cutoff information, and suspend the power conversion of the bidirectional power conversion module 115. For example, the electronic device 110 may receive the first rapid cutoff information from the operator's operation, receive a second rapid cutoff information from an automatic detection system based on a sensor of a plurality of chargers 1200, 1220, 1240 and 1280, and suspend the power conversion of the bidirectional power conversion module 115.

According to an example embodiment, the electronic device 110 may reduce the voltage of the DC bus 170 by driving the forced discharge circuit 116. For example, referring to FIG. 12b, the electronic device 110 may reduce the voltage of the DC bus 170 by shedding the current to the resistance 117 included in the bidirectional power conversion module 115.

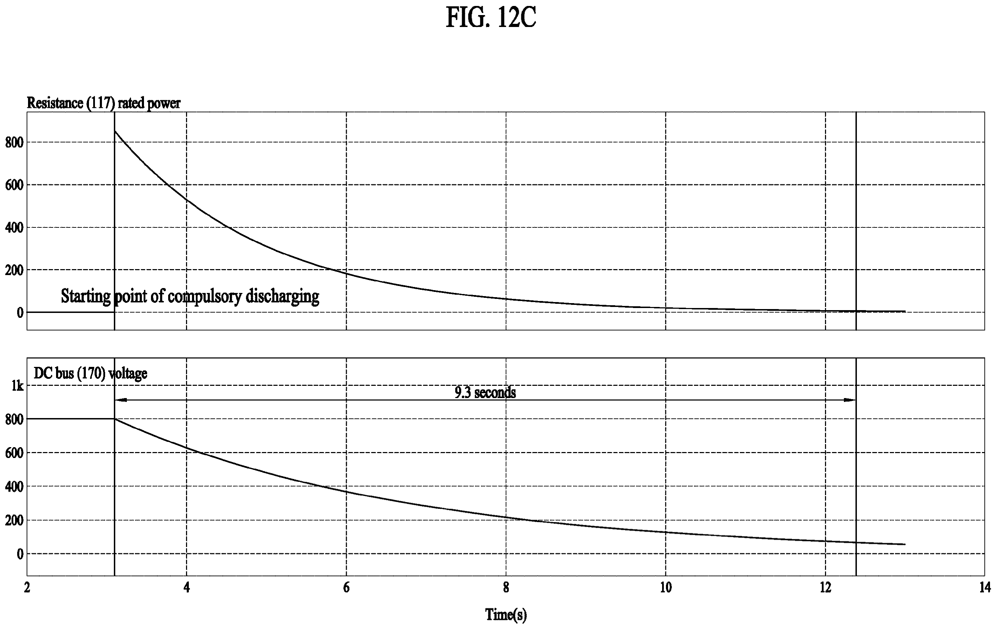

FIG. 12c illustrates the result of reducing the voltage of the DC bus 170 of the electronic device 110 according to an example embodiment. Here, in the event of an emergency, the voltage of the DC bus 170 may be set to 800V. The electronic device 110 may reduce the voltage of the DC bus 170 to 60V or less within 9.3 seconds after starting the compulsory discharging by driving the forced discharge circuit 116.

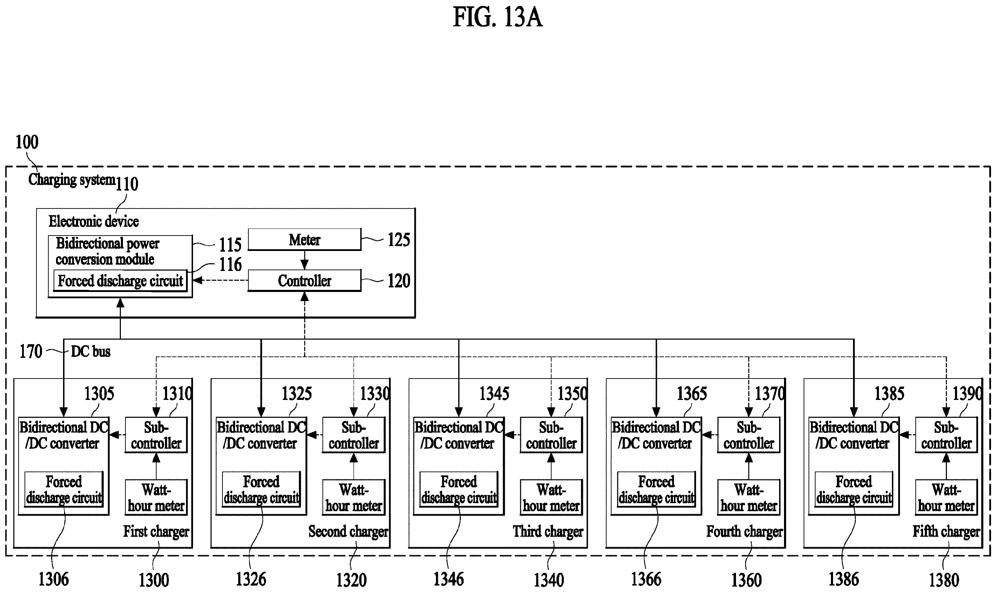

FIG. 13a to FIG. 13c are drawings for explaining a process in which the electronic device 110 reduces the voltage of the DC bus 170 according to an example embodiment.

According to an example embodiment, the charging system 100 may include the electronic device 110, a plurality of chargers 1300, 1320, 1340, 1360 and 1380 and the DC bus 170. The controller 120 included in the electronic device 110 may reduce the voltage of the DC bus 170 by controlling the bidirectional power conversion module 115 and a plurality of sub-controllers 1310, 1330, 1350, 1370 and 1390.

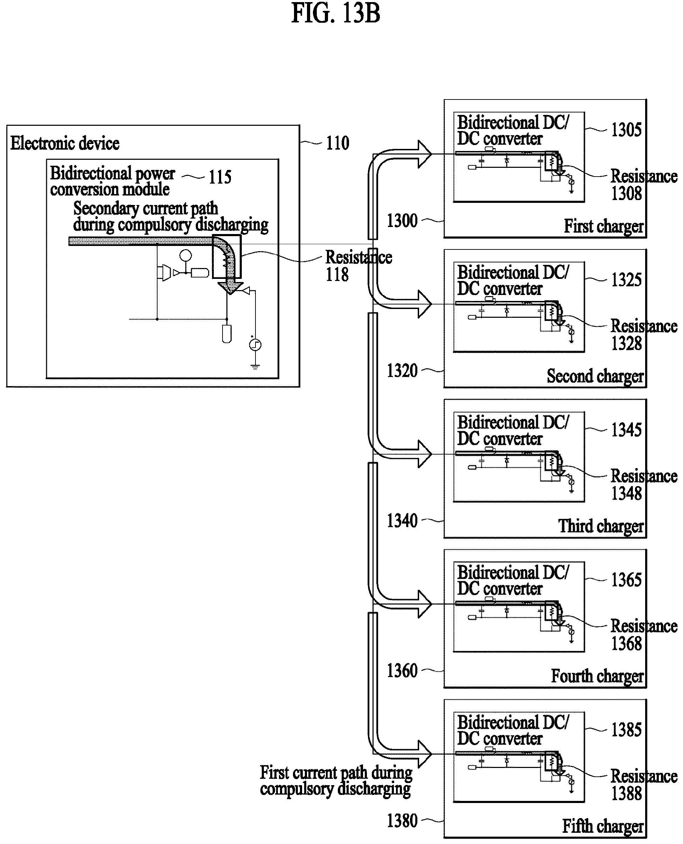

According to an example embodiment, the bidirectional power conversion module 115 of the electronic device 110 may include the forced discharge circuit 116. For example, referring to FIG. 13b, the bidirectional power conversion module 115 may include a resistance 118 for compulsory discharging. Here, as the resistance 118, used may be a resistance with a length of 138mm, outer diameter (O.D.) 39mm and power capacity of 180W. However, the specifications of resistance, which may be used, are not limited to the above.

Here, by resistances 1308, 1328, 1348, 1368 and 1388 included in the plurality of chargers 1300, 1320, 1340, 1360 and 1380 being used together, as the resistance 118 used in the example embodiment, used may be a resistance lower power capacity and smaller volume than the resistance 117 that is used in the example embodiments that are described with reference to FIG. 12a to FIG. 12c. Accordingly, the cost of implementation of rapid shutdown function may be reduced.

Meanwhile, even though FIG. 13a and FIG. 13b illustrate that the bidirectional power conversion module 115 includes the forced discharge circuit 116, the forced discharge circuit 116 may be externally outside the bidirectional power conversion module 115. For example, as a separate module, the forced discharge circuit 116 may be included in the electronic device 110 and may be controlled by the controller 120.

According to an example embodiment, a plurality of bidirectional DC/DC converters 1305, 1325, 1345, 1365 and 1385 included in the plurality of chargers 1300, 1320, 1340, 1360 and 1380 may include forced discharge circuits 1306, 1326, 1346, 1366 and 1386, respectively. For example, referring to FIG. 13b, the plurality of bidirectional DC/DC converters 1305, 1325, 1345, 1365 and 1385 may include the resistances 1308, 1328, 1348, 1368 and 1388, respectively, for compulsory discharging.

According to an example embodiment, the electronic device 110 may identify the rapid cutoff information, and may suspend charging the plurality of chargers 1300, 1320, 1340, 1360 and 1380. For example, the electronic device 110 may receive the first rapid cutoff information from the operator's operation, receive the second rapid cutoff information from the automatic detection system based on the sensor of the plurality of chargers 1300, 1320, 1340, and 1380, and may suspend charging the plurality of chargers 1300, 1320, 1340, 1360 and 1380. Accordingly, the output voltage of the plurality of chargers 1300, 1320, 1340, 1360 and 1380 may be reduced below 60V, depending on the standards of the international standard (IEC61851-23) and the domestic standard (KC61851-23).

According to an example embodiment, the electronic device 110 may reduce the voltage of the DC bus 170 by suspending the power conversion of the bidirectional power conversion module 115 and by driving the plurality of forced discharge circuits 1306, 1326, 1346, 1366 and 1386. For example, referring to FIG. 13b, the electronic device 110 may reduce the voltage of the DC bus 170 by suspending the power conversion of the bidirectional power conversion module 115 and by flowing the current to each of the resistances 1308, 1328, 1348, 1368 and 1388 included in the plurality of bidirectional DC/DC converters 1305, 1325, 1345, 1365 and 1385. Here, since charging the plurality of chargers 1300, 1320, 1340, 1360 and 1380 is suspended, the voltage of the DC bus 170 may be reduced while the output voltage of the plurality of chargers 1300, 1320, 1340, 1360 and 1380 being maintained as 60 V or less.

According to an example embodiment, the electronic device 110 may reduce the voltage of the DC bus 170 by driving the forced discharge circuit 116. For example, referring to FIG. 13b, when the voltage of the DC bus 170 is reduced below the set voltage through the plurality of chargers 1300, 1320, 1340, 1360 and 1380, the electronic device 110 may reduce the voltage of the DC bus 170 even lower by flowing the current to the resistance 118 included in the bidirectional power conversion module 115. Here, the set voltage may be determined to be different based on specifications of the charging system 100.

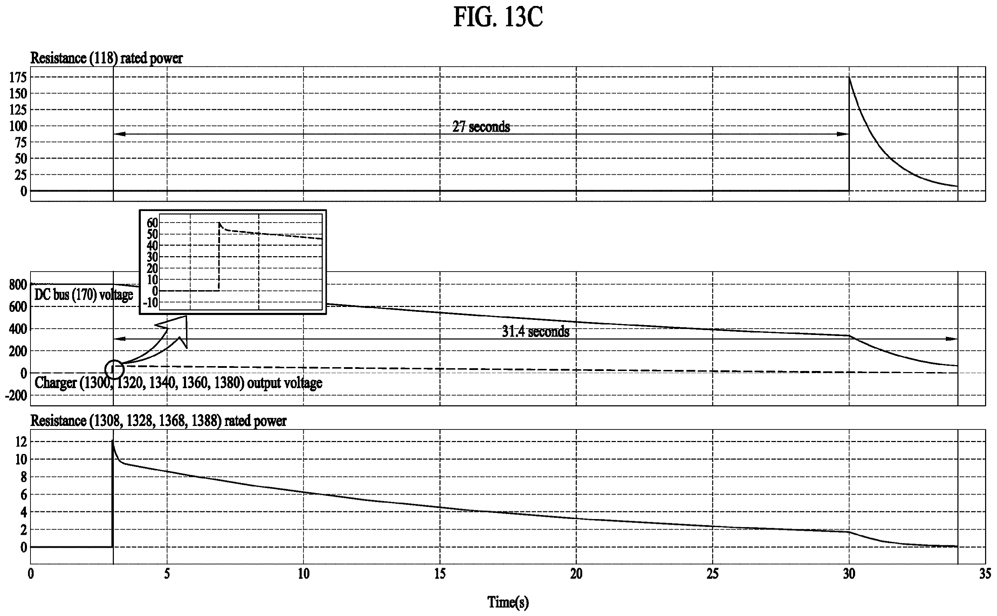

FIG. 13c illustrates the result of the electronic device 110 reducing the voltage of the DC bus 170 according to an example embodiment. Here, the charging system 100 may be set to include the five chargers 1300, 1320, 1340, 1360 and 1380, and in the event of an emergency, the voltage of the DC bus 170 may be set to 800 V.

The electronic device 110 may reduce the voltage of the DC bus 170 to less than 400 V within 27 seconds after the compulsory discharging is started by driving the plurality of forced discharge circuits 1306, 1326, 1346, 1366 and 1386 included in the plurality of chargers 1300, 1320, 1340, 1360 and 1380. After then, the electronic device 110 may reduce the voltage of the DC bus 170 to be 60 V or less within 31.4 seconds after the compulsory discharging is started by driving the forced discharge circuit 116. Here, since the charging the plurality of chargers 1300, 1320, 1340, 1360 and 1380 is suspended, the output voltage of the plurality of chargers 1300, 1320, 1340, 1360 and 1380 may be maintained as 60 V or less.

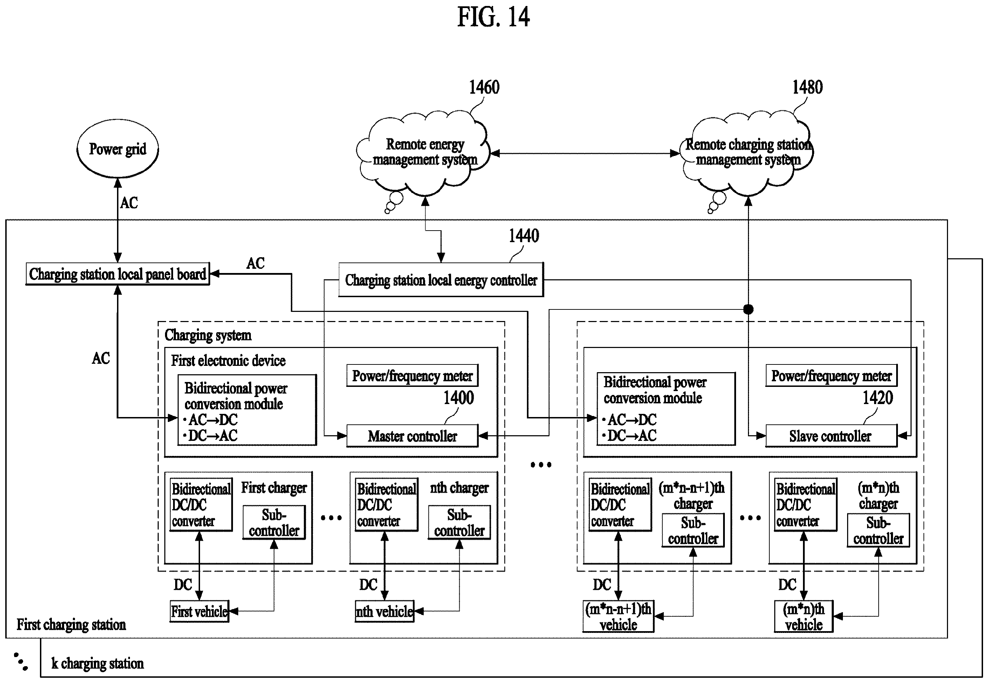

FIG. 14 represents the charging network according to an example embodiment.

According to an example embodiment, the charging network refers to an infrastructure structure for providing charging services to large -scale administrative districts such as cities and states. The charging network may include k number of charging stations, each of k number of charging stations may include m number of charging systems, and each of m number of charging systems may include n number of chargers. Therefore, the charging network may indicate the multi-point charging network that provides charging services to up to k*m*n number of vehicles.

According to an example embodiment, each of a plurality of charging systems included in a charging station may include a controller, and may include a master controller 1400 or a slave controller 1420, depending on the role. For example, referring to FIG. 14, the master controller 1400 included in a first charging system in a first charging station may act as a master to control the slave controller 1420 included in another charging system.

According to an example embodiment, the charging station may include a charging station local energy controller 1440 for managing a variety of energy used in charging station. The charging station local energy controller 1440 may manage a variety of energy, including air conditioning energy, lighting energy, power energy, hot water energy and energy used for home appliances. Meanwhile, even though FIG. 14 illustrates that the charging station local energy controller 1440 is separate from charging system, it is only a mere example embodiment, and the charging station local energy controller 1440 may be included in the master controller 1400.

According to an example embodiment, the charging network may include a remote energy management system 1460 and a remote charging station management system 1480 for managing the energy used through the charging network. The remote energy management system 1460 may manage the energy used throughout the charging network by controlling the charging station local energy controller 1440 and the remote charging station management system 1480. Further, the remote charging station management system 1480 may manage the energy used for charging or discharge of vehicle by controlling controllers (the master controller 1400, the slave controller 1420) included in each charging system.

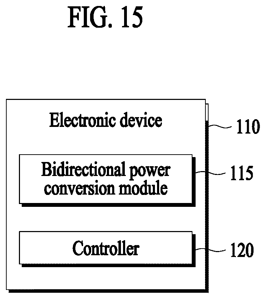

FIG. 15 illustrates the block diagram of the electronic device 110 according to an example embodiment. Contents repetitive to the description with respect to the electronic device 110 of FIG. 1 are briefly explained or omitted.

According to an example embodiment, the electronic device 110 may include the bidirectional power conversion module 115 and the controller 120. FIG. 15 only illustrates the elements that are related to the electronic device 110 according to the example embodiment. Therefore, those who have common knowledge in the technical field related to the example embodiments may understand that other universal elements may be further included in addition to the elements illustrated in FIG. 15.

For example, the electronic device 110 may further include a communication part. As a device for performing wired/wireless communication, the communication part may communicate with external electronic device. The external electronic device may be a terminal or a server. Further, the communication technologies used by the communication department may include global system for mobile communication (GSM), code division multi access (CDMA), long term evolution (LTE), 5G, wireless LAN (WLAN), wireless-fidelity (Wi-Fi), Bluetooth (Bluetooth^{™}), Radio Frequency Identification (RFID), Infrared Data Association (IrDA), ZigBee and Near Field Communication (NFC).

The controller 120 may control the overall operation of the electronic device 110 and process data and signals. The controller 120 may consist of at least one hardware unit. Further, the controller may operate by one or more software modules created by running the program code stored in the memory. Since the controller can include a processor or memory, the processor may run the program code stored in the memory to control the overall operation of the electronic device 110 and process data and signals. Further, in an example embodiment, the controller 120 may include at least one processor.

The controller 120 can control the charge or discharge of one or more vehicles connected to one or more chargers in the plurality of chargers, by controlling a plurality of sub-controllers included in the bidirectional power conversion module and plurality of chargers.

The electronic device according to the above-described example embodiments may include a processor, a memory for storing and executing program data, a permanent storage such as a disk drive, and/or a user interface device such as a communication port, a touch panel, a key and/or a button that communicates with an external device. Methods implemented as software modules or algorithms may be stored in a computer-readable recording medium as computer-readable codes or program instructions executable on the processor. Here, the computer-readable recording medium includes a magnetic storage medium (for example, ROMs, RAMs, floppy disks and hard disks) and an optically readable medium (for example, CD-ROMs and DVDs). The computer-readable recording medium may be distributed among network-connected computer systems, so that the computer-readable codes may be stored and executed in a distributed manner. The medium may be readable by a computer, stored in a memory, and executed on a processer.

The example embodiments may be represented by functional block elements and various processing steps. The functional blocks may be implemented in any number of hardware and/or software configurations that perform specific functions. For example, an example embodiment may adopt integrated circuit configurations, such as memory, processing, logic and/or look-up table, that may execute various functions by the control of one or more microprocessors or other control devices. Similar to that elements may be implemented as software programming or software elements, the example embodiments may be implemented in a programming or scripting language such as C, C++, Java, assembler, etc., including various algorithms implemented as a combination of data structures, processes, routines, or other programming constructs. Functional aspects may be implemented in an algorithm running on one or more processors. Further, the example embodiments may adopt the existing art for electronic environment setting, signal processing, and/or data processing. Terms such as "mechanism," "element," "means" and "configuration" may be used broadly and are not limited to mechanical and physical elements. The terms may include the meaning of a series of routines of software in association with a processor or the like.

The above-described example embodiments are merely examples, and other embodiments may be implemented within the scope of the claims to be described later.

## Claims

1. An electronic device for controlling a plurality of chargers, the electronic device comprising:
a bidirectional power conversion module; and
a controller configured to control the bidirectional power conversion module and the plurality of chargers,
wherein each of the plurality of chargers comprises a bidirectional direct current (DC)-to-DC (DC/DC) converter and a sub-controller configured to control the bidirectional DC/DC converter,
wherein the bidirectional power conversion module is connected to a plurality of bidirectional DC/DC converters included in the plurality of chargers through a DC bus, and
wherein the controller is configured to control charge or discharge of one or more vehicles connected to the one or more chargers among the plurality of chargers, by controlling the bidirectional power conversion module and a plurality of sub-controllers included in the plurality of chargers.

2. The electronic device of claim 1,
wherein combined peak charging power of the bidirectional power conversion module is set to be equal to or smaller than a sum of peak charging power of each of the plurality of chargers, and
wherein combined peak discharging power of the bidirectional power conversion module is set to be equal to or smaller than a sum of peak discharging power of each of the plurality of chargers.

3. The electronic device of claim 2, wherein the controller, when controlling charge or discharge of the one or more vehicles, is configured to
control charge or discharge of the one or more vehicles based on at least one of:
the combined peak charging power;
the peak charging power of each of the plurality of chargers;
requested charging power of each of the plurality of chargers;
the combined peak discharging power;
the peak discharging power of each of the plurality of chargers;
requested discharging power of each of the plurality of chargers;
priority of each of the one or more chargers;
priority of a user of each of the one or more vehicles;
an expected departure time of a user of each of the one or more vehicles;
an hourly charging fee;
proceeds from discharging by time;
proceeds from discharging by purpose;
a battery remaining level of each of the one or more vehicles;
a requested charging amount of each of the one or more vehicles; and
configuration information of the user for whether to allow discharging.

4. The electronic device of claim 3, wherein the controller, when controlling charge or discharge of the one or more vehicles, is configured to charge the one or more vehicles with requested charging power of each of the one or more chargers, in case that a sum of the requested charging power of each of the one or more chargers is smaller than the combined peak charging power.

5. The electronic device of claim 3, wherein the controller, when controlling charge or discharge of the one or more vehicles, is configured to charge the one or more vehicles according to the priority of the one or more vehicles that is determined based on at least one of the priority of the one or more chargers to which each of the one or more vehicles are connected and the priority of the user of each of the one or more vehicles, when a sum of requested charging power of each of the one or more chargers is greater than the combined peak charging power.

6. The electronic device of claim 5, wherein the controller, when charging the one or more vehicles, is configured to control charging power and discharging power of each of the one or more chargers, in order to charge the requested charging amount of each of the one or more vehicles before the expected departure time of the user of each of the one or more vehicles, based on the priority of the one or more vehicles.

7. The electronic device of claim 6, wherein the controller, when controlling the charging power and discharging power of the one or more chargers, is configured to control charging power and discharging power of each of the one or more charger in order for a charging fee that is applied to each of the one or more vehicles to be minimum, based on the hourly charging fee.

8. The electronic device of claim 6, wherein the controller, when controlling charging power and discharging power of the one or more chargers, is configured to control charging power and discharging power of each of the one or more chargers in order for economic return according to discharge of each of the one or more vehicles to be maximum, based on at least one of the proceeds from discharging by time and the proceeds from discharging by purpose.

9. The electronic device of claim 3, wherein the controller, when controlling charge or discharge of the one or more chargers, is configured to discharge at least one third vehicle configured to allow discharging among one the one or more vehicles within a maximum discharging available time corresponding to each of the at least one third vehicle in response to a discharging-required situation occurring while charging the one or more vehicles.

10. The electronic device of claim 9, wherein a maximum discharging available time of a fourth vehicle among the at least one third vehicle is determined based on at least one of:
a current battery remaining level of the fourth vehicle;
a minimum dischargeable battery remaining level;
an expected departure time of a user of the fourth vehicle; and
a requested charging amount of the fourth vehicle.

11. The electronic device of claim 3, further comprising a meter,
wherein when the meter detects power system frequency fluctuation exceeding a pre-configured range, the controller is configured to control charge or discharge of at least one fifth vehicle configured to allow frequency responding among the one or more vehicles, based on the frequency fluctuation, and
wherein the meter is configured to measure a charging power amount or a discharging power amount of the bidirectional power conversion module in response to charge or discharge of the at least one fifth vehicle.

12. The electronic device of claim 1, wherein the controller is configured to:
identify rapid cutoff information; and
decrease voltage of the DC, by controlling the bidirectional power conversion module and the plurality of sub-controllers.

13. The electronic device of claim 12, wherein, when decreasing the voltage of the DC bus, the controller is configured to:
discharge output voltage of the plurality of chargers through the DC bus; and
discharge voltage of the DC bus to a power system through the bidirectional power conversion module.

14. The electronic device of claim 12, wherein the electronic device
comprises a forced discharge circuit, and
wherein, when decreasing voltage of the DC bus, the controller is configured to:
suspend power conversion operation of the bidirectional power conversion module; and
decrease the voltage of the DC bus by driving the forced discharge circuit.

15. The electronic device of claim 12, wherein the electronic device
comprises a forced discharge circuit,
wherein each of the plurality of bidirectional DC/DC converters included in each of the plurality of chargers comprises a forced discharge circuit, and
wherein, when decreasing voltage of the DC bus, the controller is configured to:
suspend charge of the one or more chargers;
suspend power conversion operation of the bidirectional power conversion module;
decrease the voltage of the DC bus by driving a plurality of forced discharge circuit included in each of the plurality of bidirectional DC/DC converters; and
decrease the voltage of the DC bus by driving the forced discharge circuit included in the electronic device.

16. A charging system comprising:
an electronic device comprising a bidirectional power conversion module and a controller;
a plurality of chargers, each comprising a bidirectional DC/DC converter and a sub-controller that is to control the bidirectional DC/DC converter; and
a DC bus configured to connect a plurality of bidirectional DC/DC converters included in the plurality of chargers and the bidirectional power conversion module,
wherein the controller is configured to charge or discharge one or more vehicles connected to each of one or more chargers among the plurality of chargers, by controlling the bidirectional power conversion module and a plurality of sub-controllers included in the plurality of chargers.
